# EUROPEAN PATENT APPLICATION

(11) **EP 1 767 623 A1**
(43) Date of publication of application: **28.03.2007**
(21) Application number: 05745655.0
(22) Date of filing: 01.06.2005
(51) Int. Cl.: C12N 15/09, C12M 1/00, C12M 1/34, G01N 1/34

(54) **CONTAINER FOR NUCLEIC ACID EXTRACTION, METHOD OF CLEANING SOLID MATRIX AND RELEVANT CLEANING MECHANISM, AND METHOD OF PURIFYING NUCLEIC ACID**

(30) Priority: 02.06.2004 JP 2004164986; 10.02.2005 JP 2005034774
(71) Applicant: Arkray, Inc., Kyoto-shi, Kyoto 601-8045 (JP)
(72) Inventor: KAMATA, Tatsuo, ARKRAY Inc., Kyoto-shi, Kyoto 6018045 (JP); OHTA, Shinichi, ARKRAY Inc., Kyoto-shi, Kyoto 6018045 (JP); EGAWA, Kouji, ARKRAY Inc., Kyoto-shi, Kyoto 6018045 (JP)
(74) Representative: Pluckrose, Anthony William
(86) International application number: PCT/JP2005/010078
(87) International publication number: WO 2005/118803

(57) **Abstract**

The present invention relates to a nucleic acid extraction container (2) which includes a nucleic acid extraction element (20) for extracting a target nucleic acid from a sample and supporting the extracted nucleic acid, and a container main body formed as a separate member from the nucleic acid extraction element and having a having a housing vessel (27) for storing the nucleic acid extraction element (20). The nucleic acid extraction element (20) includes, for example, a solid matrix (23) for supporting the target nucleic acid, and a holding member (20) for holding the solid matrix (23). Preferably, the solid matrix (23) is held as tilted with respect to a vertical axis of the holding member (20).

## Description

### TECHNICAL FIELD

The present invention relates to a technique for extracting a target nucleic acid from a sample.

### BACKGROUND ART

Analysis of nucleic acid has been playing an important role in the medical field in diagnosis of infectious or genetic diseases on a genetic level. Today, its field of application is expanding beyond the medical field into various other fields such as agriculture and food. Generally, analysis of nucleic acid includes processes of extraction of nucleic acid from a sample, amplification of the purified nucleic acid, and detection of the amplified nucleic acid. When personnel cost, repeatability and analysis efficiency are considered, it is preferable that each of the processes is performed automatically by a machine, and ideally all the processes should be performed automatically by a machine (See Patent Documents 1 and 2 for example).

In an effort toward automated purification of nucleic acid, methods which use a nucleic acid-binding carrier have been developed. As an example of such methods, there is a method which utilizes nucleic acid-binding silica particles and a chaotropic ions (See Patent Document 3 for example). This method includes mixing a sample with nucleic acid-binding silica particles and chaotropic ions, which are capable of isolating nucleic acid in the sample, in order to bind the nucleic acid in the sample with the nucleic acid-binding silica particles, then separating the sample into solid-phase and liquid-phase, and then eluting the nucleic acid which is bound to the nucleic acid-binding silica particles. However, separating solid-phase from liquid-phase requires some operation such as centrifugation and filtration using a filter, which leads to complicated operation procedure in the apparatus as well as complicated configuration of the automated apparatus.

Another example of the method of using a nucleic acid-binding carrier is one which uses a magnetic carrier (See Patent Document 4 and 5 for example). This method includes absorption of nucleic acid by magnetized silica particles, then separating the silica particles with a magnet, then cluting the nucleic acid from the separated silica particles, and then recovering the eluent. This method is advantageous for automated apparatus since solid-phase and liquid-phase are separated from each other without e.g. centrifugal separation.

Problems of this method, however, include a relatively low recovery rate of the nucleic acid and that the rate itself is subject to influence from the kind of specimen. Another problem is that magnetized silica particles act as an inhibitor in an amplification reaction when PCR (Polymerase Chain Reaction) method is employed as a method of amplifying the nucleic acid. In addition, magnetized silica particles are not very much compatible with a typical detection method for nucleic acid in which marking is made to the nucleic acid and the marks are optically measured. If this method is used, the magnetized silica particles cause measurement errors, and variation of the amount of magnetized silica particles at the time of purification lower repeatability.

Still another example of the method of purifying nucleic acid is one using a solid matrix which is impregnated with e.g. reagents necessary for extracting nucleic acid (See Patent Documents 6 through 8 for example). In this method, a target nucleic acid is extracted by dripping a sample onto the solid matrix. Thereafter, cleansing is performed to remove extra components which may act as inhibitors in the amplification process of the nucleic acid. More specifically, cleansing off of the extra components is performed by punching a disc out of the solid matrix, placing the punched discal solid matrix into a microtube, and eluting the extra components from the discal solid matrix in the microtube.

If this method is employed, a step of punching a part of the solid matrix is required, and further, in order for the solid matrix to be punched, drying the solid matrix is required in order to punch the solid matrix. Therefore, this method requires considerable time before the discal solid matrix can be cleansed. Also, since the method of cleansing of the discal solid matrix is performed by diffusing the extra components from the solid matrix into the cleansing liquid, this method requires a considerable amount of time for cleansing. Especially, in order to achieve the cleansing to a sufficient level, it is necessary to change the cleansing liquid held in the microtube repeatedly, which also extends the time necessary for the cleansing. Moreover, to shorten the time required for cleansing, the size of the discal solid matrix has to be reduced, whereby the amount of target nucleic acid recoverable from the sample becomes small. As a result, sensitivity in the nucleic acid detection process is expected to be low and therefore, the time for amplification need be increased in order to obtain a sufficient amount of nucleic acid.

Still further, in the method of using a discal solidmatrix, the amplification of the nucleic acid is performed in the microtube used for cleansing the nucleic acid, and then, the analysis of the nucleic acid is also made in the microtube with an optical technique. Therefore, if the discal solid matrix is unduly large, the discal solid matrix blocks the optical path for the photometry, making impossible to analyze the nucleic acid. In order to avoid such a problem as this, the discal solid matrix is required to be punched into a sufficiently small size, for example, 2 mm, which leads to the above-described problem that the amount of the target nucleic acid recoverable from the sample is decreased. In addition, punching a disc of solid matrix which is not greater than 2 mm in size poses a big burden on the user, and the punching operation will not be an efficient process.

Automated apparatus for amplification of nucleic acid using the PCR method is in advancement, and there is already PCR apparatuses available on the market. A popular PCR apparatus can perform amplification of nucleic acid and detection of the amplified nucleic acid.

However, PCR apparatuses available on the market mustis required to be used with an amplification kit dedicated to the apparatus. Typically, the amplification kit includes a lid and a container which contains some reagentsa container which has a lid and pre-filled with reagents such as a primer and polymerase. Therefore, the user is forced to open the lid of the container first, then dispense pour the nucleic acid solution into the container, stir the reaction liquid in the container, close the lid, and then set the container to the PCR apparatus. In other words, the common amplification kit depends heavily on the user's manual operation, which poses a burden upon the user. In addition, due to the major manual intervention by the user, analysis efficiency is low, and there is room for concern for decreased repeatability due to different levels of skill among the users. Further, since the container used for the amplification kit is a general-purpose product manufactured by resin injection molding, integrally with the lid by resin molding, so it is difficult to design for the PCR apparatus capable of opening and closingto open or close the lid automatically. For this reason, it is difficult in for PCR apparatuses to replace the user's manipulation to perform operations automatically with the method using a common dedicated kit.

Other examples of the method of amplifying nucleic acid, other than PCR method include ICAN (Isothermal and Chimeric Primer-initiated Amplification of Nucleic acid) method and LAMP (Loop-Mediated Isothermal Amplification) method. In comparison to the PCR method, these methods require a sufficiently higher level of purification of nucleic acid in order to achieve sufficient amplification of a target nucleic acid. Therefore, if purification and amplification of nucleic acid are to be automated using an amplification method other than PCR method, a technique for increasing the level of nucleic acid purification must be established.
Patent Document 1 : JP-A 2001-149097 Gazette
Patent Document 2 : JP-A 2003-304899 Gazette
Patent Document 3 : JP Patent 2680462 Gazette
Patent Document 4 : JP-A S60-1564 Gazette
Patent Document 5 : JP-A H9-19292 Gazette
Patent Document 6 : U.S.A. Patent No. 5496562 Specification
Patent Document 7 : U.S.A. Patent No. 5939259 Specification
Patent Document 8 : U.S.A. PatentNo. 6168922 Specification

### DISCLOSURE OF THE INVENTION

The present invention aims at mechanical automation for the entire sequence of nucleic acid analysis including purification of nucleic acid, amplification of the nucleic acid and measurement of the nucleic acid, thereby reducing burden on the user and improving analysis efficiency and repeatability.

Further, the present invention aims at providing a nucleic acid purification technique which allows a variety of amplification methods applicable to an automated purification and amplification of nucleic acid by an apparatus.

A first aspect of the present invention provides a nucleic acid extraction container which includes: a nucleic acid extraction element for extraction of a target nucleic acid from a sample and carrying of the extracted nucleic acid; and a container main body formed as a separate member from the nucleic acid extraction element, having a housing vessel for storage of the nucleic acid extraction element.

Preferably, the nucleic acid extraction element includes a solid matrix for supporting the target nucleic acid, and a holding member for holding the solid matrix.

The solid matrix is held as tilted with respect to a vertical axis of the holding member for example, and preferably held horizontally or substantially horizontally with respect to the vertical axis. In this case, the solid matrix is preferably formed as a disc.

The state in which the solid matrix is held as tilted with respect to the vertical axis can be achieved by e.g. holding the solid matrix as penetrated by the holding member. In this case, the holding member is formed to include for example: a tapered portion with a decreasing diameter toward a tip; a pin-shaped portion extending from the tapered portion for penetration through the solid matrix; and a holding tab for preventing the solid matrix from coming off the pin-shaped portion.

Alternatively, the solid matrix may be held in parallel to or substantially in parallel to the vertical axis of the holding member. In this case, the solid matrix is preferably formed as a sheet.

The state in which the solid matrix is parallel to or substantially parallel to the vertical axis can be achieved by suspending the solid matrix with the holding member for example. In this case, the holding member is formed to include a clip portion, for example, for clipping an end of the solid matrix thereby suspending the solid matrix.

It is preferable that the container main body includes one or more cleansing vessels for holding cleansing liquid necessary to remove an extra component from the solid matrix. In this case, the container main body is preferably provided with surplus cleansing liquid removal means for removal of surplus cleansing liquid from or around the solid matrix.

The surplus cleansing liquid removal means includes a water absorbing member for example. The water absorbing member may be of a porous material such as resin foam and cloth.

The nucleic acid extraction container according to the present invention is provided as a cartridge for example, for setting in a nucleic acid analyzer.

If the nucleic acid analyzer includes a carrier member for taking the nucleic acid extraction element, which supports the target nucleic acid, from the housing vessel and moving the nucleic acid extraction element to another location, the nucleic acid extraction element is formed to include an engagement portion for engagement with the carrier member. In this case, the engagement portion is formed to be cylindrical for example, for fitting with a tip portion of the carrier member, and preferably, the engagement portion includes one or more cutouts for application of elastic force to the carrier member upon fitting with the tip portion of the carrier member. The cutout or cutouts include at least one of a slit, a notch and a through hole.

On the other hand, the holding member includes a projection, for example, which is used for breaking the fit between the carrier member and the engagement portion. Preferably, the projection is provided by a flange extending outward. In this case, the housing vessel is formed with a stepped portion for seating the projection upon placement of the nucleic acid extraction element in the housing vessel.

A second aspect of the present invention provides a method of removing an extra component other than a target nucleic acid from a solid matrix which supports the target nucleic acid, using a cleansing liquid. The method includes a repeated cycle of a state in which the solid matrix is submerged in the cleansing liquid and a state in which the solid matrix is not submerged in the cleansing liquid, caused by moving the solid matrix in up-and-down directions relatively to the cleansing liquid.

In the repeated cycle of the state in which the solid matrix is submerged in the cleansing liquid and the state in which the solid matrix is not submerged in the cleansing liquid, the solid matrix is tilted with respect to the up-and-down directions. Preferably, the solid matrix is perpendicular or substantially perpendicular to the up-and-down directions.

A third aspect of the present invention provides a method of purifying a target nucleic acidusing a nucleic acid extraction element which includes a solid matrix for supporting the target nucleic acid and a holding member for holding the solid matrix. The method includes: a nucleic acid supporting step of causing the solid matrix to support the target nucleic acid in a sample by soaking the solid matrix in the sample; and a cleansing step of removing an extra component other than the target nucleic acid from the solid matrix, using a cleansing liquid. The cleansing step is provided by a repeated cycle of a state in which the solid matrix is submerged in the cleansing liquid and a state in which the solid matrix is not submerged in the cleansing liquid, caused by moving the solid matrix in up-and-down directions relatively to the cleansing liquid.

In the method of purifying nucleic acid according to the present invention, the solid matrix held by the holding member is tilted with respect to a vertical axis of the holding member in the nucleic acid extraction element. In this case, the cleansing step is performed by moving the extraction element in up-and-down directions, with the solid matrix tilted with respect to the up-and-down directions. Preferably, the cleansing step is performed by moving the nucleic acid extraction element in the up-and-down directions, with the solid matrix being perpendicular or substantially perpendicular to the up-and-down directions.

The cleansing step includes removal of surplus cleansing liquid from the solid matrix by a water absorbing member after completion of the repeated soaking of the solid matrix in the cleansing liquid.

A fourth aspect of the present invention provides a mechanism for removing an extra component other than a target nucleic acid from a solid matrix which supports the target nucleic acid, using a cleansing liquid. The mechanism repeats a cycle of a state in which the solid matrix is submerged in the cleansing liquid and a state in which the solid matrix is not submerged in the cleansing liquid, by moving the solid matrix inup-and-down directions relatively to the cleansing liquid.

The cleansing mechanism according to the present invention moves the solid matrix as tilted with respect to the up-and-down directions for example. Preferably, the solid matrix is perpendicular or substantially perpendicular to the up-and-down directions when moved in the up-and-down directions.

It should be noted here that the term "sample" used in the present invention includes biologic samples (such as whole blood, blood serum, blood plasma, urea, saliva and bodily fluid) from animals and non animals. The term "nucleic acid" means DNA or RNA, including duplex DNA, uniplex DNA, plasmid DNA, genomic DNA, cDNA, exogenous RNA parasitic organism (such as virus, bacillus and fungus) and endogenous RNA.

### BRIEF DESCRIPTION OF THE DRAWINGS

Fig. 1 is an overall perspective view for describing a nucleic acid analyzer.
Fig. 2 is a plan view showing an internal configuration of the nucleic acid analyzer in Fig. 1.
Fig. 3 is a sectional view taken in lines III-III in Fig. 2.
Fig. 4 is a sectional view taken in lines IV-IV in Fig. 1.
Fig. 5 is an overall perspective view showing a nucleic acid purification cartridge.
Fig. 6 is a sectional view taken in lines VI-VI in Fig. 5.
Fig. 7A is an overall perspective view of a nucleic acid extraction element in the nucleic acid purification cartridge, and Fig. 7B is a sectional view of the nucleic acid extraction element.
Fig. 8 is an overall perspective view of a nucleic acid amplification cartridge.
Fig. 9 is a sectional view taken in lines IX-IX in Fig. 8.
Fig. 10 is a sectional view of a primary portion for describing a solid matrix cleansing operation.
Fig. 11 is a sectional view of a primary portion showing a lid removing operation from the nucleic acid amplification cartridge.
Fig. 12 is a sectional view of a primary portion for describing a removing operation of a diffused nucleic acid extraction element using a lid.
Fig. 13A is a sectional view of a primary portion for describing a placing operation of the nucleic acid extraction element into a reaction vessel or the nucleic acid amplification cartridge, and Fig. 13B is a sectional view of a primary portion for describing a lid removing operation from the reaction vessel.
Fig. 14 is a sectional view taken in lines XIV-XIV in Fig. 13.
Fig. 15 is a sectional view representing a section taken in lines XV-XV in Fig. 2, for describing a temperature controlling mechanism and a measurement mechanism.
Fig. 16 is a plan view showing an internal configuration, for describing a nucleic acid analyzer.
Fig. 17 is a sectional view taken in lines XVII-XVII in Fig. 16.
Fig. 18 is a sectional view taken in lines XVIII-XVIII in Fig. 16.
Fig. 19 is an overall perspective view of a nucleic acid purification cartridge.
Fig. 20A is a perspective view showing a nucleic acid extraction element in the nucleic acid purification cartridge, Fig. 20B is a plan view thereof, and Fig. 20C is a sectional view taken in lines XXc-XXc in Fig. 20A.
Fig. 21 is a sectional view of a container of the nucleic acid purification cartridge, representing a section taken in lines XXI-XXI in Fig. 19.
Fig. 22 is a sectional view of a primary portion showing a removal operation of the nucleic acid extraction element from a housing vessel in the container.
Fig. 23 is an overall perspective view of a nucleic acid amplification cartridge.
Fig. 24A is a sectional view taken in lines XXIVa-XXIVa in Fig. 23, and Fig. 24B is a sectional view showing a state where a lid is removed in Fig. 24A.
Fig. 25 is a front view of a primary portion, for describing an operation of attaching a tip to a nozzle.
Fig. 26 is a front view of a primary portion, for describing an operation of attaching the nucleic acid extraction element to the nozzle.
Fig. 27 is a front view of a primary portion, for describing an operation to detach the tip from the nozzle.
Fig. 28 is a front view of a primary portion, for describing an operation of detaching the nucleic acid extraction element from the nozzle.
Fig. 29 is a sectional view of a primary portion, showing an operation of inserting a turning member into the lid of the nucleic acid amplification cartridge.
Fig. 30 is a sectional view of a primary portion, showing anoperationof removing the lid of the nucleic acid amplification cartridge.
Fig. 31 is a sectional view of a primary portion showing an operation of putting the nucleic acid extraction element into a reaction vessel in the nucleic acid amplification cartridge.
Fig. 32 is a sectional view of a primary portion for describing an operation of re-attaching the lid of the nucleic acid amplification cartridge.
Fig. 33 is a sectional view, representing a section taken in lines XXXIII-XXXII I in Fig. 16, for describing the measurement mechanism.
Fig. 34 is a graph showing a result of fluorescence intensity measurement according to Embodiment 1 (PCR method), with the horizontal axis representing temperatures and the vertical axis representing derivative values of the fluorescence intensity.
Fig. 35 is a graph showing a result of fluorescence intensity measurement according to Embodiment 2 (ICAN method), with the horizontal axis representing the number of cycles and the vertical axis representing fluorescence intensity.
Fig. 36 is a graph showing a result of fluorescence intensity measurement according to Embodiment 3 (LAMP method), with the horizontal axis representing the number of cycles and the vertical axis representing fluorescence intensity.

### BEST MODE FOR CARRYING OUT THE INVENTION

Hereinafter, description will be made for a first and a second embodiments of the present invention with reference to the drawings.

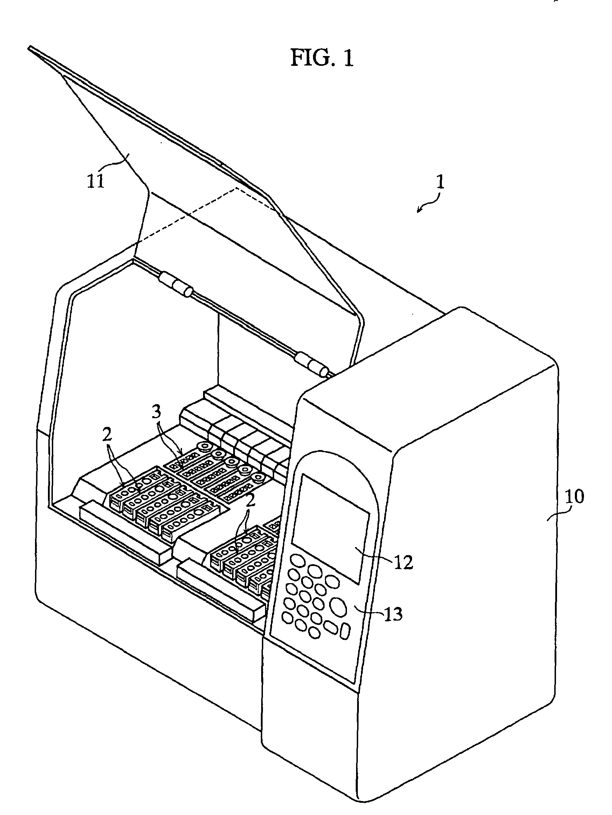

First, the first embodiment will be covered with reference to Fig. 1 through Fig. 15.

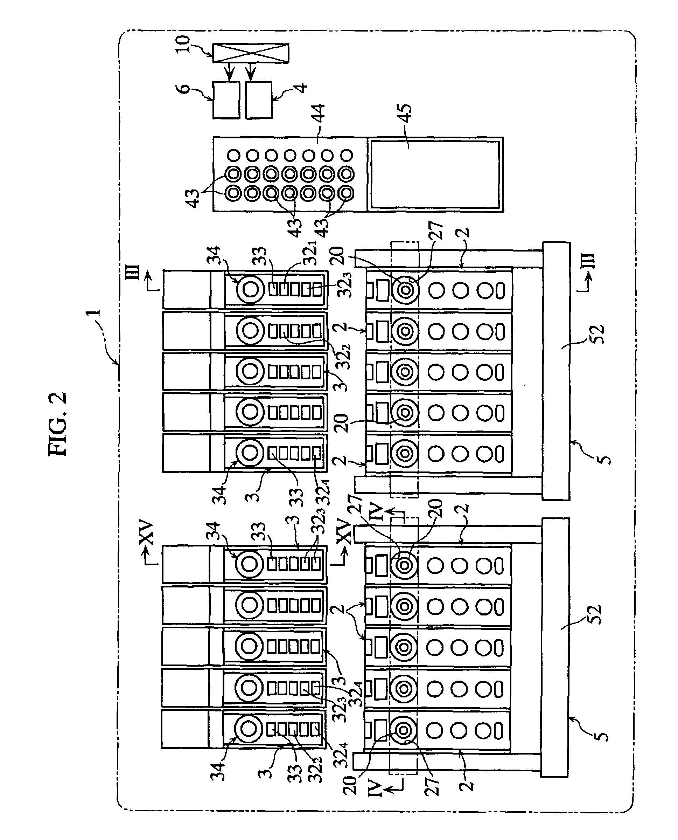

Fig. 1 through Fig. 4 show a nucleic acid analyzer 1 which automatically performs extraction of nucleic acid in a sample, amplification of the extracted nucleic acid and analysis of the amplified nucleic acid. As shown in Fig. 1 and Fig. 2, a plurality of nucleic acid purification cartridges 2 and the same number of nucleic acid amplification cartridges 3 are set in a case 10 when the analyzer is used.

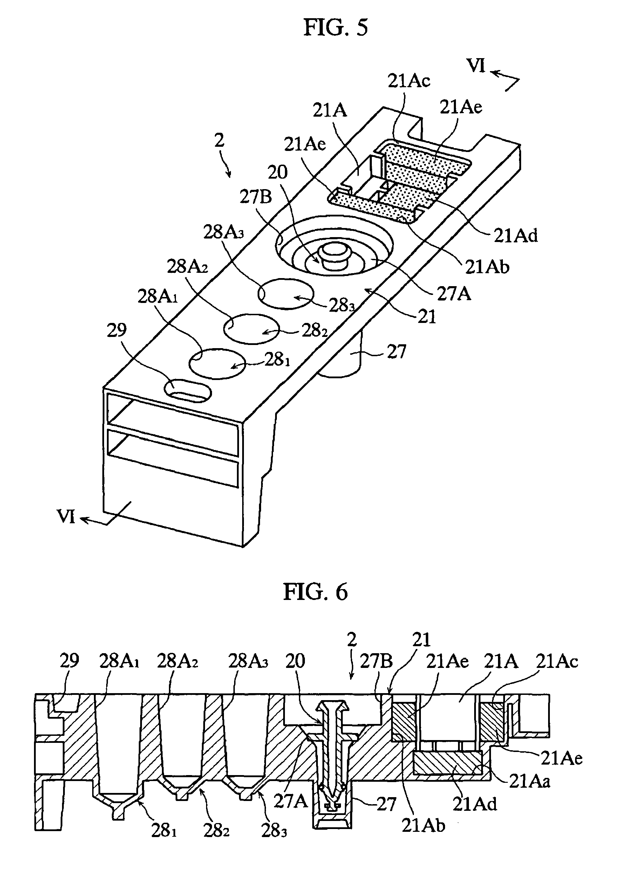

As shown in Fig. 5 and Fig. 6, the nucleic acid purification cartridge 2, which is a component that enables automatic purification of nucleic acid, includes a nucleic acid extraction element 20 and a cartridge main body 21.

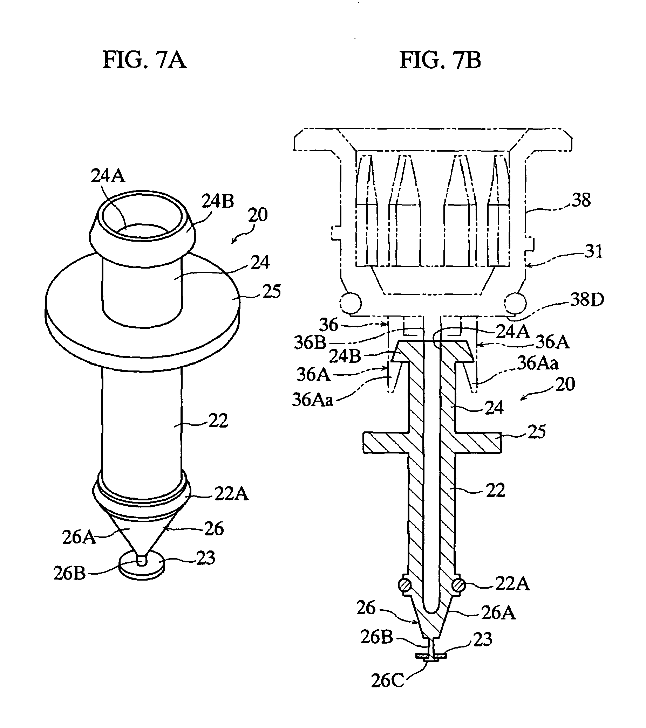

The nucleic acid extraction element 20, which is used for extracting nucleic acid from the sample, is housed in a housing vessel 27 of the cartridge main body 21 to be described later. As shown clearly in Fig. 7A and Fig. 7B, the nucleic acid extraction element 20 has a holding member 22 and a solid matrix 23.

The holding member 22 includes a cylindrical part 24, a flange 25, and holding portion 26, and is formed entirely by resin molding for example.

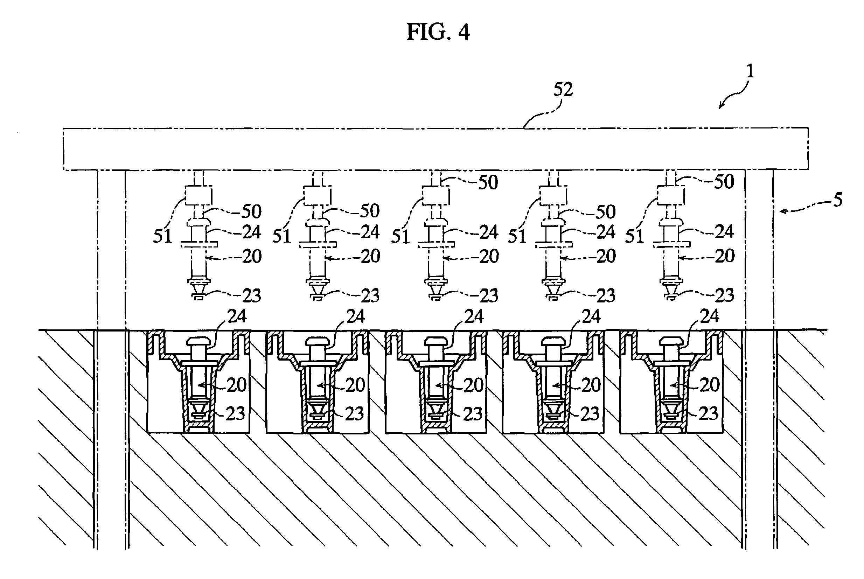

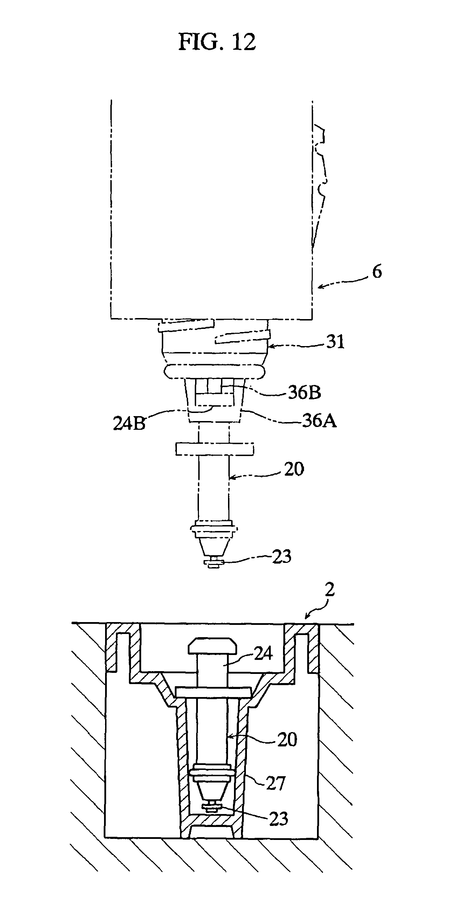

The cylindrical part 24 serves to move the nucleic acid extraction element 20 (See Fig. 4 and Fig. 12), and has a recess 24A and ana latching head 24B. The recess 24A serves to accommodate an insertion pin 50 of a nucleic acid purification mechanism 5 or a pin 36B of a lid 31 of the nucleic acid amplification cartridge 3 (See Fig. 4 and Fig. 12), each of which will be described later. The latching head 24B, which serves to be latched together with latching pawls of the lid 31 of the nucleic acid amplification cartridge 3 to be described later, extends radially outward.

The flange 2, which serves to be engaged with a stepped portion 27A of the housing vessel 27 when the nucleic acid extraction element 20 is placed into the housing vessel 27 of the nucleic acid purification cartridge 2 to be described later, is formed like a ring extended radially outward (See Fig. 12).

The holding portion 26, which serves to hold a solid matrix 23, includes a tapered portion 26A, a pin-shaped portion 26B and a holding tab 26C. The tapered portion 26A helps cleansing liquid attached on the holding portion 26 move downward. The pin-shaped portion 26B penetrates the solid matrix 23. The holding tab 26C prevents the solid matrix 23 from slipping off the pin-shaped portion 26B (holding portion 26) when the pin-shaped portion 26B penetrates the solid matrix 23.

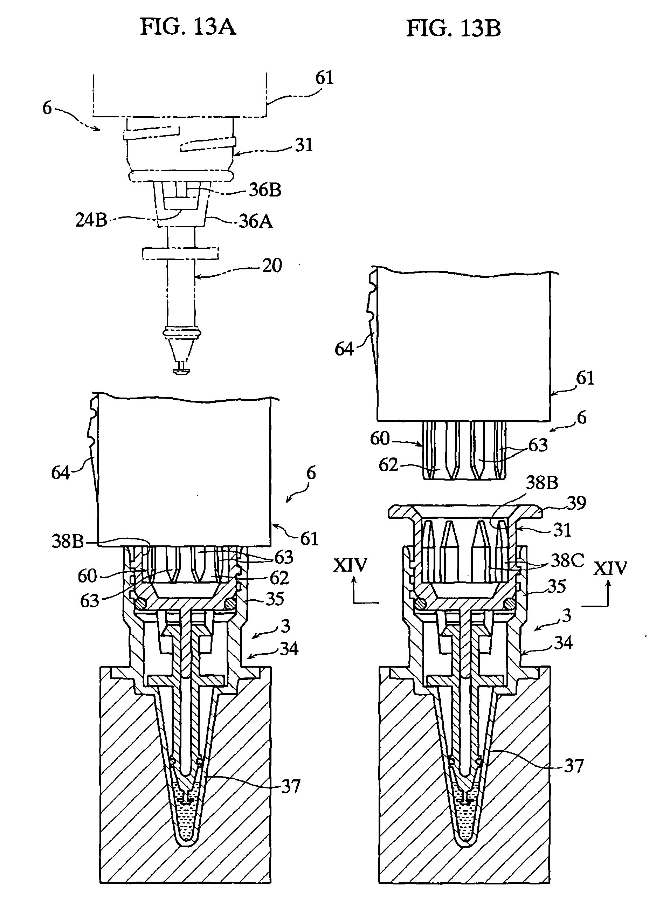

Slightly above the holding portion 26 of the holding member 22, an O-ring 22A is fixed. As shown clearly in Fig. 13B, the O-ring 22A assures a tight fit of the nucleic acid extraction element 20 to an inner surface of the reaction vessel 34 in the nucleic acid amplification cartridge 3 when the element is housed in the reaction vessel 34. When the nucleic acid extraction element 20 is housed in the reaction vessel 34, a sealed space is formed below the O-ring 22A which makes a tight contact with the inner surface of the reaction vessel 34. Since the O-ring 22A is above the holding portion 26, the solid matrix 23 is housed in the sealed space.

The solid matrix 23, which serves to retain the nucleic acid in the sample, is provided by e.g. a filter paper impregnated with reagents for extracting the nucleic acid. The solid matrix 23 is formed in discal shape. The solid matrix 23 is supported horizontally or substantially horizontally, i.e. perpendicularly to a vertical axis of the holding member 22, and penetrated by the pin-shaped portion 26B.

Examples of the reagents usable for extracting nucleic acid include weak bases, chelate reagents, a combination of an anionic surfactant or anionic detergent and uric acid or a uric acid salt, and a combination of a nucleic acid adsorbent carrier and an adsorption accelerator. As the nucleic acid adsorbent carrier, a variety of known materials may be employed, and silica bead is typically used. The adsorption accelerator may be provided by anything as long as it destroys cell membrane or denaturalizes protein in the sample, and helps absorption of the nucleic acid onto the nucleic acid adsorbent carrier: Examples includes chaotropic materials (such as guanidine thiocyanate and other acid salts of guanidine). The solid matrix 23 can be anything as long as it is able to adsorb nucleic acid in the sample, and is not limited to those exemplified above.

According to the nucleic acid extraction element 20 described above, it is possible to keep the solid matrix 23 spaced from the bottom of reaction vessel 34 when the nucleic acid extraction element 20 is housed in the reaction vessel 34 of the nucleic acid amplification cartridge 3 described later. This prevents the solid matrix 23 from locating on a photometric path for the photometry mechanism 8, improving accuracy in the photometry. Since the solid matrix 23 is not on the photometric path, it is possible to use the solid matrix 23 having a larger size. Therefore, it becomes possible to carry more nucleic acid in the solid matrix 23, perform amplification of nucleic acid more efficiently, and improve accuracy of the analysis.

As shown in Fig. 5 and Fig. 6, the cartridge main body 21 includes a housing vessel 27, three cleansing vessels 28₁ through 28₃, a sample holding vessel 29 and an surplus liquid removal vessel 21A, and is made as a single piece by e.g. resin molding.

The housing vessel 27 serves to house the nucleic acid extraction element 20, and includes a stepped portion 27A to mate with the flange 25 of the nucleic acid extraction element 20. In order to prevent the nucleic acid extraction element 20 from getting out of an upper opening 27B of the housing vessel 27 before the use of the nucleic acid purification cartridge 2, it is preferable that the upper opening 27B is closed with a sealing member provided by e.g. a thin film of aluminum. The sealing member may be configured to be peeled off by the user when the nucleic acid purification cartridge 2 is used, or to be peeled automatically in the nucleic acid analyzer 1.

Each of the cleansing vessels 28₁ through 28₃ serves to hold cleansing liquid for removing impurities from the solid matrix 23 after loading the solid matrix 23 with nucleic acid. Preferably, the cleansing liquid is retained in the cleansing vessels 28₁ through 28₃ as part of the nucleic acid purification cartridge 2. Alternatively however, the cleansing liquid may be held in the nucleic acid analyzer 1 and dispensed into the cleansing vessels 28₁ through 28₃ at the time of analysis. As the cleansing liquid, material which seldom elutes the nucleic acid from the solid matrix 23 and prevents impurities from bonding can be used(Examples include guanidine hydrochloride and ethanol). The three cleansing vessels 28₁ through 28₃ may retain the same cleansing liquid or may retain different cleansing liquids.

When cleansing liquid is preliminarily set into each of the cleansing vessels 28₁ through 28₃, upper openings 28A₁ through 28A₃ of the cleansing vessels 28₁ through 28₃ need to be sealed with sealing members such as thin film of aluminum. In this case, the upper openings 28A₁ through 28A₃ of the cleansing vessels 28₁ through 28₃ may be sealed individually, or all the three upper openings 28A₁ through 28A₃ of the cleansing vessels 28₁ through 28₃ may be sealed together. Still alternatively, all of the upper openings 28A₁ through 28A₃ of the cleansing vessels 28₁ through 28₃ and the upper opening 27B of the housing vessel 27 may be sealed together.

The sample holding vessel 29 serves to hold a sample as an object of analysis (object from which nucleic acid is to be extracted). Holding the sample in the sample holding vessel 29 with the sample may be made before setting the nucleic acid purification cartridge 2 to the nucleic acid analyzer 1, or after setting the nucleic acid purification cartridge 2 to the nucleic acid analyzer 1. In the latter case, it is preferable that the nucleic acid analyzer 1 automatically dispenses the sample into the sample holding vessel 29. The sample may be provided by whole blood, blood serum, blood plasma, urine, saliva or bodily fluid.

The surplus liquid removal vessel 21A serves to remove surplus cleansing liquid from the nucleic acid extraction element 20, the solid matrix 23 and the holding portion 26 of the holding member 22 after the solid matrix 23 in the nucleic acid extraction element is cleansed. The surplus liquid removal vessel 21A has a bottom wall 21Aa and a front and rear walls 21Ab, 21Ac on which water absorbing members 21Ad, 21Ae are fixed. The water absorbing members 21Ad, 21Ae are made of a porous material such as resin foam and cloth, and is capable of absorbing surplus cleansing liquid from the nucleic acid extraction element 20 by contacting with the nucleic acid extraction element 20.

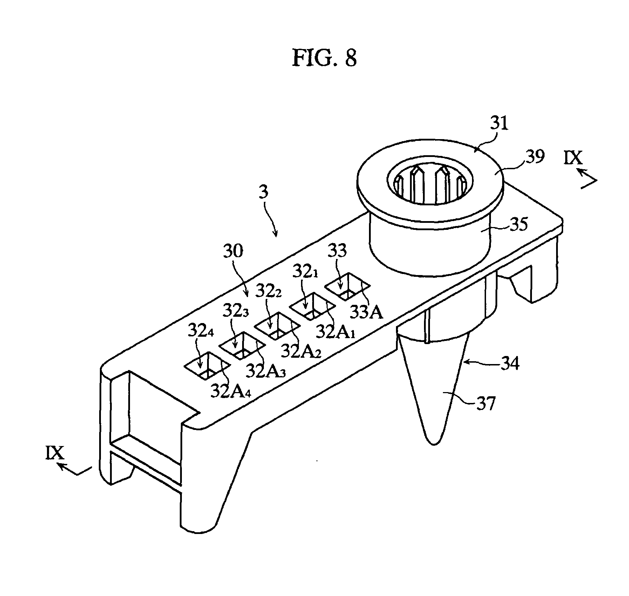

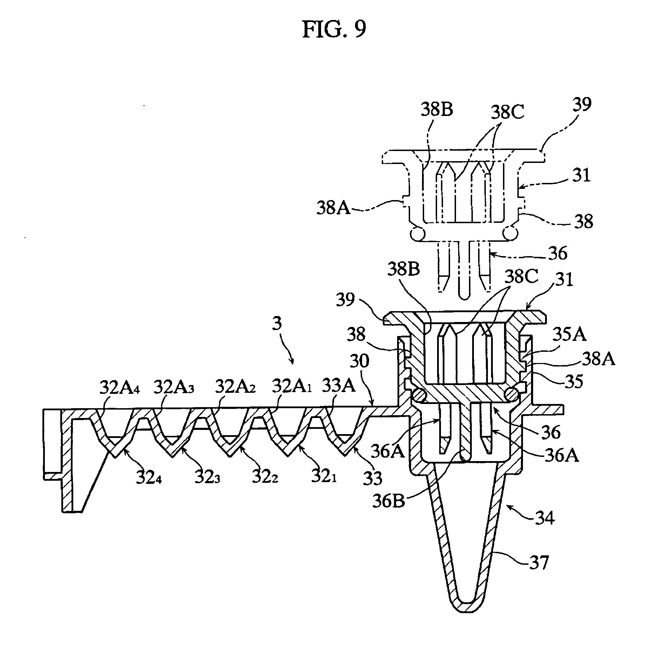

As shown in Fig. 8 and Fig. 9, the nucleic acid amplification cartridge 3, which enables automatic amplification and measurement of nucleic acid in the nucleic acid analyzer 1, includes a cartridge main body 30 and a lid 31.

The cartridge main body 30 includes four reagent vessels 32₁ through 32₄, a mixing vessel 33, and a reaction vessel 34, and is formed by e.g. resin molding, into a single piece.

Each of the reagent vessels 32₁ through 32₄ serves to hold a reagent or the like which is necessary for the amplification and measurement of nucleic acid, in the form of an aqueous solution or a suspension. The kind of the reagents to be held in each of the reagent vessels 32₁ through 32₄ is selected in accordance with the amplification method and the measurement method to be employed. Examples of the usable amplification method include PCR (Polymerase Chain Reaction) method, ICAN (Isothermal and Chimeric Primer-initiated Amplification of Nucleic acid) method, LAMP (Loop-Mediated Isothermal Amplification) method and NASBA (Nucleic acid Sequence Basea Amplification) method. Reagents used in PCR method are at least two kinds of primers, a dNTP, and a DNA polymerase. Reagents used in ICAN method are a chimera primer, a DNA polymerase, and an RNaseH. Reagents used in LAMP method are one or more kinds of LAMP primers, a dNTP, strand displacement DNA synthetase, and a reverse transcriptase. Reagents used in NASBA method are at least two kinds of primers, a dNTP, an rNTP, a reverse transcriptase, aDNApolymerase, aRNaseH, andanRNApolymerase. On the other hand, usable measurement methods include fluorescence measurement, coloration measurement, radioactivity measurement or electrophoresis. It should be noted that the present description assumes that the nucleic acid analyzer 1 uses fluorescence measurement method. In this case, use of a fluorescent primer is preferred.

The mixing vessel 33 is used when two or more regents held in the reagent vessels 32₁ through 32₄ are mixed with each other before supplying to the reaction vessel 34.

It is preferable that the reagent vessels 32₁ through 32₄ preliminary hold the reagents, but the reagents may be holded in the nucleic acid analyzer 1 and dispensed later into the reagent vessels 32₁ through 32₄. In this case, the reagent vessels 32₁ through 32₄ must have their upper openings 32A₁ through 32A₄ be sealed with a sealing member provided by e.g. a thin film of aluminum. The upper openings 32A₁ through 32A₄ of the reagent vessels 32₁ through 32₄ may be sealed individually, or all the four upper openings 32A₁ through 32A₄ of the reagent vessels 32₁ through 32₄ may be sealed together. Still alternatively, all the upper openings 32A₁ through 32A₄ and 33A of the reagent vessels 32₁ through 32₄ and of the mixing vessel 33 may be sealed together.

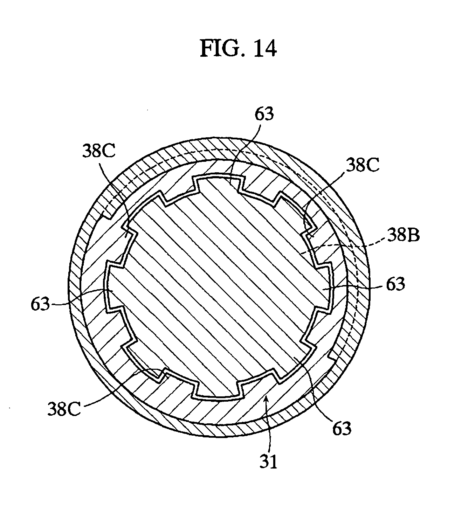

The reaction vessel 34 serves to hold a reagent mix and the nucleic acid extraction element 20, and provides a reaction space for reactions between the nucleic acid supported by the nucleic acid extraction element 20 and the reagent mix prepared in the mixing vessel 33 (See Fig. 13 and Fig. 14). The reaction vessel 34 has a cylindrical part 35 and a reaction detection part 37.

The cylindrical part 35 to which the lid 31 is fitted has an inner circumferential wall formed with a thread groove 35A.

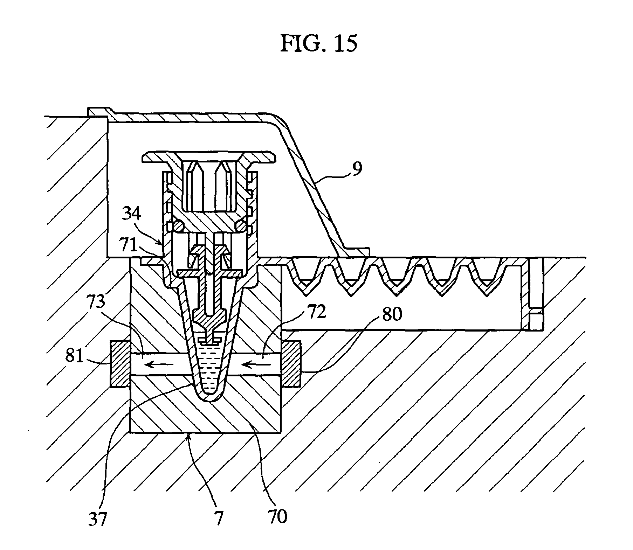

The reaction detection part 37 provides a space for amplification reactions of nucleic acid, and functions as a detection vessel for fluorescence measurement. Specifically, the reaction detection part 37 is a portion exposed to light from a light emitting part 80 of the photometry mechanism 8 to be described later (See Fig. 15).

The lid 31, which determines whether the inside space of the reaction detection part 37 is sealed or not, is attachable/detachable to and from the reaction vessel 34 (cylindrical part 35). More specifically, the lid 31 is attached to the cylindrical part 35 or completely be detached from the cylindrical part 35 (reaction vessel 34) by turning. The lid 31 includes a cylindrical main body part 38, a flange 39 and a holding portion 36.

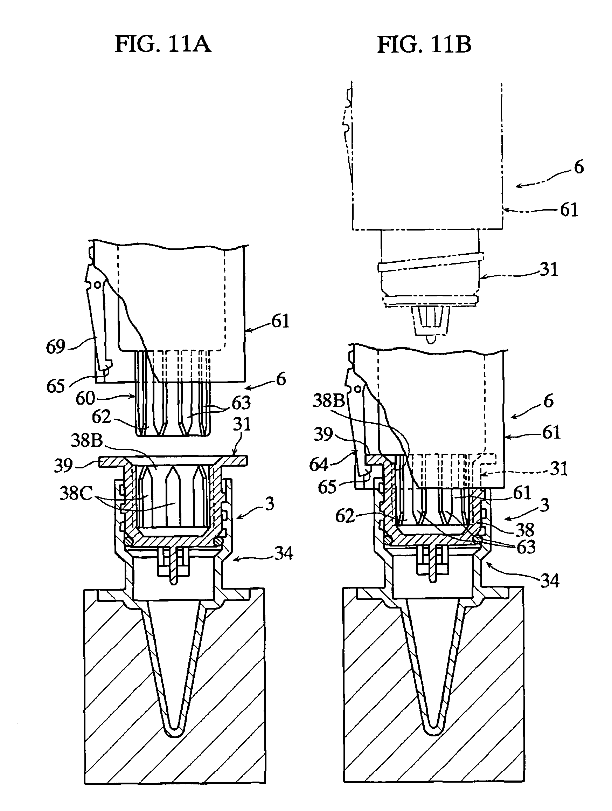

The main body part 38 has a thread ridge 38A to set to a thread groove 35A of the cylindrical part 35 in the reaction vessel 34, and a recess 38B for insertion of a turning member 60 (See Fig. 11B) in the lid attaching/removing mechanism 6 to be described later. The recess 38B has an inner circumferential surface provided with a plurality of ribs 38C. The ribs 38C are spaced circumferentially at an interval, and extend vertically. Each rib 38C has a tapered upper end which becomes narrower toward the tip.

The flange 39 allows engagement by pawls 64 of the outer-coat member 61 in the lid attaching/removing mechanism 6 to be described later, when the lid removed from the reaction vessel 34 is moved (See Fig. 11B). The flange 39 extends radially outward from an upper end of the main body part 38, like a ring.

As shown in Fig. 7B, the holding portion 36 serves to hold the nucleic acid extraction element 20 in the nucleic acid purification cartridge 2, and has a pair of latching pawls 36A, and a pin 36B.

The latching pawls 3 6A, which serve to engage with a latching head 24B of the nucleic acid extraction element 20, protrude downward from a bottom surface 38D of the main body part 38. Each latching pawl 36A has on its tip a hook portion 36Aa. The hook portion 36Aa moves pivotally. The hook portions 36Aa of the latching pawls 36A can move closer to and away from each other.

The pin 36B is to be inserted into a recess 24A of the cylindrical part 24 of the nucleic acid extraction element 20, and protrudes downward from the bottom surface 38D of the main body part 38. The pin 36B serves as a guide when the nucleic acid extraction element 20 is held by the lid 31, and after the nucleic acid extraction element 20 is held by the lid 31, serves to reduce rattling of the nucleic acid extraction element 20 with respect to the lid 31.

As shown in Fig. 1, the nucleic acid analyzer 1 includes a case 10 provided with a lid 11, a display portion 12 and an operation portion 13. The lid 11 determines whether the inside of the case 10 is exposed or not. The lid 11 is opened when the cartridges 2, 3 is placed on or removed from the case 10 whereas the lid 11 is closed at the time of nucleic acid analysis or when the apparatus is not in use. The display portion 12 serves to display results of analysis etc., and is provided by an LCD, for example. The operation portion 13 serves to perform various settings or initiating analysis or the like.

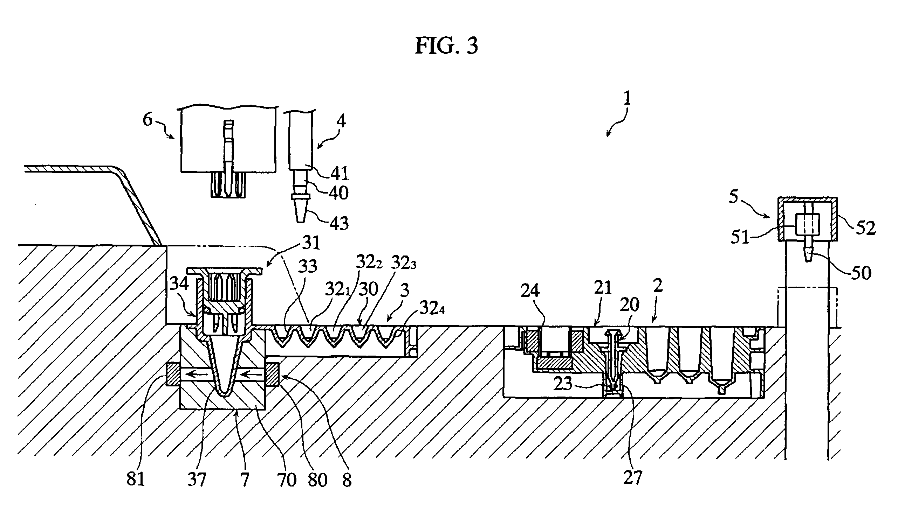

As shown in Fig. 2 and Fig. 3, the case 10 houses therein, a pipette unit 4, a nucleic acid purifying operation mechanism 5, a lid attaching/removing mechanism 6, a temperature controlling mechanism7, and a photometry mechanism 8 to be described later.

The pipette unit 4, which serves primarily for preparation of a mixture liquid in the nucleic acid amplification cartridge 3, has a nozzle 40. The pipette unit 4 is used to supply a sample or cleansing liquid to the nucleic acid purification cartridge 2 as necessary.

The nozzle 40 is connected with an unillustrated pump for sucking in/discharging out a liquid, and switches a state in which a sucking force is applied inside the nozzle 40 and a state inwhich a discharging force is applied inside. The nozzle 40 is movable in up-and-down directions as well as horizontal directions by a drive mechanism such as a robot arm (not illustrated) controlled by a controller 10 which includes a CPU, for example. The nozzle 40 can be moved to the reagent vessels 32₁ through 32₄, the mixing vessel 33 and the reaction vessel 34 in the nucleic acid amplification cartridge 3 as well as the housing vessel 27 in the nucleic acid purification cartridge 2. When the nozzle 40 is used in preparation of a mixed sample or dispensing a mixed sample into the reaction vessel 34 (reaction detection part 37), a tip 43 is attached to a tip portion 42 as shown in Fig. 3. As shown in Fig. 2, the tips 43 are held in a rack 44 adjacent to a stand-by position for the nozzle 40 (pipette unit 4). Near the rack 44 is disposed a disposal box 45 for disposal of used tips 43.

As shown in Fig. 2 through Fig. 4 and Fig. 10, the nucleic acid purifying operation mechanism 5 serves to control operations of the nucleic acid extraction element 20 when nucleic acid in the sample is extracted by using the nucleic acid extraction element 20 of the nucleic acidpurification cartridge 2. The nucleic acid purifying operation mechanism 5 includes a plurality of insertion pins 50, cylindrical bodies 51 and a support frame 52.

The insertion pins 50, each of which serves to fit into the cylindrical part 24 of the nucleic acid extraction element 20, are supported by the support frame 52 movably therewith.

The cylindrical body 51 serves to remove the nucleic acid extraction element 20 from the insertion pin 50 and covers the insertion pin 50 so as to be movable in up-and-down directions independently from the insertion pin 50. Specifically, the cylindrical body 51 resides above the nucleic acid extraction element 20 (stand-by position) any time except when removing the nucleic acid extraction element 20 from the insertion pin 50, whereas it is moved relatively below the insertion pin 50 when removing the nucleic acid extraction element 20 from the insertion pin 50.

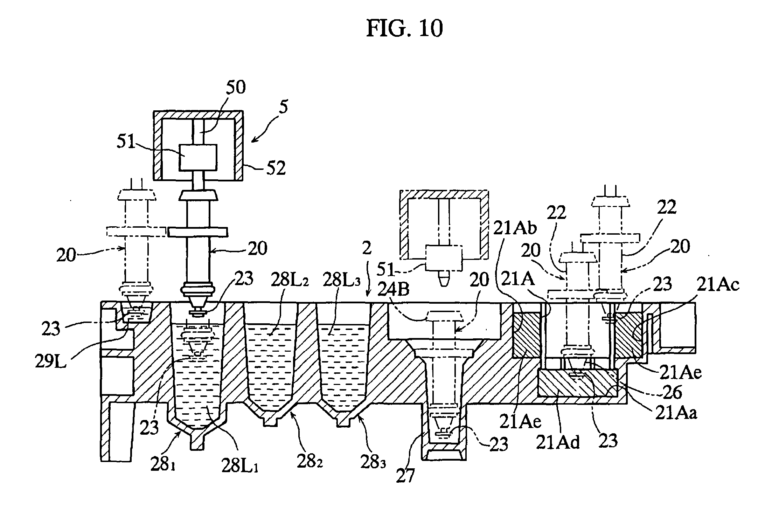

The support frame 52 supports the insertion pins 50 in a predetermined interval along the row of the nucleic acid purification cartridges 2, and serves as a carrier to move these insertion pins 50. The support frame 52 is movable in up-and-down directions as well as fore-and-aft directions by an unillustrated drive mechanism, whose operation is controlled by e.g. the controller 10 shown in Fig. 2. Therefore, the insertion pins 50 and the nucleic acid extraction elements 20 attached thereto can move in up-and-down directions and fore-and-aft directions with the support frame 52. With this arrangement, a plurality of the nucleic acid extraction elements 20 can perform impregnation of a sample to solid matrices 23, cleansingof the solidmatrices 23 and removal of surplus solution in a simultaneous sequence (See Fig. 10).

As shown in Fig. 11 and Fig. 13, the lid attaching/removing mechanism 6 serves to remove the lid 31 from the reaction vessel 34 of the nucleic acid amplification cartridge 3 or to attach the lid 31 to the reaction vessel 34, and includes a turning member 60 and an outer-coat member 61. The turning member 60 and the outer-coat member 61 are movable in up-and-down directions as well as horizontal directions by an unillustrated drive mechanism, and is controlled by the controller 10 (See Fig. 2).

The turning member 60 serves to apply a rotating force to the lid 31 of the nucleic acid amplification cartridge 3, to hold the lid 31, and to move the lid 31, and includes a generally columnar tip portion 62. The tip portion 62 of the turning member 60 is formed with a plurality of ribs 63. The ribs 63 are spaced circumferentiallyof the tipportion 62 at an interval, and extend vertically. Each of the ribs 63 has a tapered lower end which becomes narrower toward the tip. These ribs 63 engage with the ribs 38C of the lid 31 as shown in Fig. 14, nesting alternately with adjacent ribs 38C in the recess 38B when the tip portion 62 is inserted.

According to the present configuration, when the tip portion 62 of the turning member 60 is rotated, the ribs 63 of the tip portion 61 and the ribs 38C of the recess 38B interfere with each other, so it is possible to prevent slipping rotation of the tip portion 62 in the recess 38B of the lid 31, and to apply the rotating force of the turning member 60 appropriately to the lid 31. Further, the ribs 38C in the recess 38B are tapered so they become narrower toward the upper end whereas the ribs 63 in the tip portion 61 in the turning member 60 are tapered so they become narrower toward the lower end. Therefore, it is possible to insert the tip portion 61 of the turning member 60 into the recess 38B of the lid 31 easily and reliably.

The outer-coat member 61 provides an outer sheath to the turning member 60, and is cylindrical. The outer-coat member 61 has pawls 64 to engage with the flange 39. Each pawl 64 has a tip portion 64 and a hook portion 65 provided thereto, and the hook portion 65 can move pivotally. The pawls 64 are engaged with the flange 39 of the lid 31 when the tip portion 62 of the turning member 60 is inserted into the recess 38B of the lid 31. This locks the turning member 60 to the lid 31 as a single piece, making possible to move the lid 31 by moving the turning member 60 and the outer-coat member 61. The pawls 62 are automatically released from the engagement with the lid 31 when the turning member 60 re-attaches the lid 31 to the reaction vessel 34.

As shown in Fig. 15, the temperature controlling mechanism 7 serves to control the temperature of a heat block 70, thereby controlling the temperature of a liquid held in the reaction detection part 37 in the nucleic acid amplification cartridge 3. The temperature of the heat block 70 is monitored by an unillustrated temperature sensor, and in accordance with results of the monitoring by the temperature sensor, a feedback control is provided to the heat block 70. The heat block 70 is formed with a recess 71 which is shaped correspondingly to an outer shape of the reaction detection part 37 of the nucleic acid amplification cartridge 3. With is arrangement, it is possible to provide selective and efficient temperature control to the reaction vessel 34 in the heat block 7. Further, the heat block 70 is provided with a straight through holes 72, 73 connecting with the recess 71. The through hole 72 provides a path for light which is emitted from a light emitting part 80 of the photometry mechanism 8 to be described later, to come to the reaction detection part 37 in the reaction vessel 34. The through hole 73 provides a path for light which has passed the reaction detection part 37 to come to a light receiving part 81.

The photometry mechanism 8 includes the light emitting part 80 and the light receiving part 81. The light emitting part 80 sends an exciting light to the reaction detection part 37 via the through hole 72. The light receiving part 81 receives fluorescent light when the exciting light is thrown to the reaction detection part 37 via the through hole 73. In the photometry mechanism 8, the light emitting part 80 emits the exciting light continuously while the light receiving part 81 monitors the amount of the fluorescent light continuously, whereby the extent of the amplification of nucleic acid is obtained at real-time.

Next, description will cover an operation in the nucleic acid analyzer 1.

To perform an analysis of nucleic acid with the nucleic acid analyzer 1, firstly, nucleic acid purification cartridges 2 and nucleic acid amplification cartridges 3 are set to the nucleic acid analyzer 1 as shown in Fig. 1 through Fig. 4. The number of the cartridges 2, 3 to be set is discretionary as long as the number of nucleic acid purification cartridges 2 and the number of nucleic acid amplification cartridges 3 are equal to each other. The following description assumes that the nucleic acid purification cartridge 2 has its cleansing vessels 28₁ through 28₃ containing cleansing liquid, and the sample holding vessel 29 is already loaded with a sample before the nucleic acid purification cartridge 2 is set to the nucleic acid analyzer 1.

Next, in accordance with the number of the cartridges 2, 3 and the kinds of the cartridges 2, 3 set in the nucleic acid analyzer1, settings (purification method, amplification method and measurement method) are made by using the operation portion 13 provided in the nucleic acid analyzer 1 while making conformation on the display portion 12. Once these settings are complete, the nucleic acid analyzer 1 automatically performs purification, amplification and measurement of nucleic acid.

As shown in Fig. 4, the purification of nucleic acid is performed in the nucleic acid purification cartridge 2 by moving the nucleic acid extraction element 20 by the nucleic acid purifying operation mechanism 5.

More specifically, first, with the insertion pin 50 of the nucleic acid purifying operation mechanism 5 positioned right above the housing vessel 27 of the container 21 of the nucleic acid purification cartridge 2, the support frame 52 is driven to lower and then lift. By lowering the insertion pin 50, the insertion pin 50 is fitted into the cylindrical part 24 of the nucleic acid extraction element 20, making the nucleic acid extraction element 20 locked to the nucleic acid purifying operation mechanism 5. As the insertion pin 50 is lifted, the nucleic acid extraction element 20 is lifted by the nucleic acid purifying operation mechanism 5.

Next, as shown in Fig. 10, the insertion pin 50 is moved together with the support frame 52 to soak the solid matrix 23 of the nucleic acid extraction element 20 into a sample 29L which is held in the sample holding vessel 29 of the nucleic acid purification cartridge 2, allowing the solid matrix 23 to carry nucleic acid in the sample 29L.

Next, the solid matrix 23 is soaked sequentially into cleansing liquids 28L₁ through 28L₃ held in the three cleansing vessels 28₁ through 28₃. More specifically, cleansing of the solid matrix 23 is performed by moving the solid matrix 23 in up-and-down directions by the nucleic acid purifying operation mechanism 5 in each cleansing vessel 28. In this step, the nucleic acid purifying operation mechanism 5 is controlled to repeat a cycle of a state in which the solidmatrix23 is completely submerged into the cleansing liquids 28L₁ through 28L₃ and a state in which the solid matrix 23 is above the surface of the cleansing liquids 28L₁ through 28L₃.

In such a cleansing method as the above, the solid matrix 23 is slammed onto the liquid surface when moved from the state in which the solid matrix 23 is above the liquid surface to the state in which it is submerged into the cleansing liquids 28L₁ through 28L₃. In this moment, the solid matrix 23 comes under a big load since the solid matrix 23 is held horizontally or substantially horizontally. On the other hand, when the solid matrix 23 is being moved in the cleansing liquids 28L₁ through 28L₃, the solid matrix 23 comes under a big transfer resistance since the solid matrix 23 is held horizontally or substantially horizontally, providing a load which creates convection flow in the cleansing liquid. In these movement and actions, it is possible to remove impurities efficiently from the solid matrix 23. This effectively reduces inhibition caused by the impurities to the amplification of nucleic acid to be performed in the process of amplifying the nucleic acid, enabling to perform the analysis of the nucleic acid accurately. Such advantages are obtained not only when the solid matrix 23 is moved horizontally but also when the solid matrix 23 is moved while held at an angle with respect to the vertical axis.

Finally, a tip portion of the nucleic acid extraction element 20 is brought into contact with the water absorbing members 21Ad, 21Ae which are held in the surplus liquid removal vessel 21A. The water absorbing member 21Ad is disposed to make contact with the bottom wall 21Aa and the front and the rear walls 21Ab, 21Ac of the surplus liquid removal vessel 21A. So if the tip portion of the nucleic acid extraction element 20 is brought into contact with all portions of the water absorbing member 21Ad, surplus cleansing liquid is removed efficiently from the tip portion of the nucleic acid extraction element 20, primarily from the solid matrix 23 and the holding portion 26 of the holding member 22. As a result, it becomes possible to reduce inhibition caused by the impurities in the cleansing liquid to the amplification of the nucleic acid to be performed later by using the nucleic acid extraction element 20.

It should be appreciated that after the completion of the cleansing, the solid matrix 23 may be dried by air blow as held by the nucleic acid purifying operation mechanism 5. After completing the cleansing (or drying by air depending upon the case) of the solid matrix 23, the nucleic acid extraction element 20 is detached from the insertion pin 50, and the nucleic acid extraction element 20 is re-placed into the housing vessel 27 in the nucleic acid purification cartridge 2. Removal of the nucleic acid extraction element 20 from the insertion pin 50 is performed as described earlier, by lowering the cylindrical body 51 of the nucleic acid purifying operation mechanism 5 thereby causing the cylindrical body 51 to interfere with the latching head 24B.

As described, according to the nucleic acid purification cartridge 2, the solid matrix 23 is moved easily in the nucleic acid analyzer 1 by using a solid (nucleic acid extraction element 20) which supports the nucleic acid. In this regards, the nucleic acid purification cartridge 2 contributes to automated analysis of nucleic acid.

Amplification of nucleic acid is performed by preparing a reagent mix in the nucleic acid amplification cartridge 3, dispensing the mixture into the reaction vessel 34 in the nucleic acid amplification cartridge 3, and then placing the solid matrix 23 which supports the nucleic acid into the reaction vessel 34, together with the holding member 22. It should be noted that if the reagent mix and the solid matrix 23 are held together in the reaction vessel 34, temperature control is provided to the heat block 70 (See Fig. 15) in accordance with the amplification method employed, whereby temperature control is provided to the reaction vessel 34.

Preparation of the reagent mix is performed by first attaching a tip 43 to the nozzle of the pipette unit 4, then dispensing predetermined amounts of the reagents sequentially from the reagent vessels 32₁ through 32₄ in the nucleic acid amplification cartridge 3 to the mixing vessel 33, and then mixing the dispensed liquids in a pipetting operation by the pipette unit 4 (See Fig. 3).

Dispensing of the compound liquid to the reaction vessel 34 is performed by the pipette unit 4 after the lid attaching/removing mechanism 6 removes the lid 31 from the reaction vessel 34. As shown in Fig. 11A and Fig. 11B, removal of the lid 31 by the lid attaching/removing mechanism 6 is performed by inserting the tip portion 62 of the turning member 60 of the lid attaching/removing mechanism 6 into the recess 38B of the lid 31, and then lifting the turning member 60 while it is rotated. When the turning member 60 is inserted into the recess 38B, the hook portions 65 of the pawls 64 in the outer-coat member 61 engage with the flange 39 of the lid 31. Therefore, it is possible to move the lid 31, which was removed from the reaction vessel 34, together with the turning member 60 and the outer-coat member 61. In this way, the nucleic acid analyzer 1 and the nucleic acid amplification cartridge 3 embody innovations for easy and reliable removal of the lid 31 from the nucleic acid amplification cartridge 3 toward the goal of automated amplification of nucleic acid and further, fully automated analysis of nucleic acid.

On the other hand, placing of the solid matrix 23 into the reaction vessel 34 is achieved by using the lid attaching/removing mechanism 6 and the lid 31 of the nucleic acid amplification cartridge 3. More specifically, as shown in Fig. 12 and Fig. 13, placing of the solid matrix 23 is accomplished by a series of operations such as holding of nucleic acid extraction element 20 by the lid 31, and re-attaching the lid 31 to the reaction vessel 34.

As shown in Fig. 7B and Fig. 12, holding of the nucleic acid extraction element 20 by the lid 31 is accomplished by first causing the lid attaching/removing mechanism 6 to move the lid 31 above the housing vessel 27 in the nucleic acid purification cartridge 2, and then by lowering the lid 31. In the process of lowering the lid 31, the pin 36B of the lid 31 is inserted into the recess 24A of the cylindrical part 24 in the nucleic acid extraction element 20. This fixes the positional relationship of the lid 31 with respect to the cylindrical part 24 of the nucleic acid extraction element 20, and a pair of latching pawls 36A in the lid 31 is brought appropriately in alignment with the latching head 24B of the cylindrical part 24. As the latching pawls 36A are pressed onto the latching head 24B from above, the latching pawls 36A are displaced so that their hook portions 36Aa move away from each other. As the latching pawls 36A are further lowered, the pin 36B of the lid 31 is inserted further into the recess 24A of the cylindrical part 24, and as the hook portions 36Aa come below the latching head 24B, the hook portions 36Aa come closer to each other. As a result, the latching pawls 36A make an engagement with the latching head 24B, capturing the nucleic acid extraction element 20 in the lid 31. This situation is highly stable since the pin 36B of the lid 31 is inserted into the recess 24A of the cylindrical part 24, enabling to reduce rattles of the nucleic acid extraction element 20 in the lid 31.

As shown in Fig. 13, re-attaching of the lid 31 is achieved by bringing the lid 31 into alignment with the reaction vessel 34, and then rotating the turning member 60 which has a hold on the lid 31. Specifically, by applying a rotating force to the lid 31 which is in alignment with the target, the lid 31 is threaded into the cylindrical part 35 of the reaction vessel 34. Upon threading of the lid 31 into the cylindrical part 35, the pawls 64 of the outer-coat member 61 cease their engagement with the flange 39 of the lid 31, releasing the turning member 60 and the outer-coat member 61 for movement independent from the lid 31. On the other hand, since the lid 31 holds the nucleic acid extraction element 20, the nucleic acid extraction element 20 sits in the reaction vessel 34. Since the nucleic acid extraction element 20 has the O-ring 22A at a position slightly above the holding portion 26 as described earlier, the solid matrix 23 of the nucleic acid extraction element 20 is fixed in the sealed space, at a predetermined distance above the bottom of the reaction vessel 34. The reaction detection part 37 already has a reagent mix, and the solid matrix 23 is entirely soaked therein in the reaction detection part 37, so the nucleic acid elutes from the solid matrix 23 and the eluted nucleic acid reacts with the reagents to amplify.

As described, according to the nucleic acid analyzer 1, it is possible to move the nucleic acid extraction element 20 from the housing vessel 27 to the reaction vessel 34 and to set the element therein by using the lid attaching/removing mechanism 6 which is a mechanism needed for attaching/detaching the lid 31. Specifically, according to the nucleic acid analyzer 1, there is no need for a specific mechanism for moving the nucleic acid extraction element 20. This enables to avoid complexity of the apparatus, and thereby enabling to reduce size increase of the apparatus when performing bothpurification of nucleic acid and amplification of the nucleic acid within a single piece of equipment. As another advantage, this enables to reduce increase in the number of operation mechanisms which need to be controlled in the apparatus.

As shown in Fig. 15, measurement of the nucleic acid is performed by the photometry mechanism 8 while the reaction vessel 34 is covered by a light shielding member 9 from above.

In the photometry mechanism 8, an exciting light is thrown from the light emitting part 80 to the reaction detection part 37 of the reaction vessel 34 while a fluorescent light generated in the reaction detection part 37 is received by the light receiving part 81. As described earlier, the solid matrix 23 is placed at a position not interrupting the photometric measurement by the photometry mechanism 8, so accurate measurement of nucleic acid is possible according to the nucleic acid analyzer 1.

As has been described thus far, according to the nucleic acid analyzer 1, it is possible to perform automated analysis of nucleic acid simply by only setting the nucleic acid purification cartridges 2 and the nucleic acid amplification cartridges 3 of the above-described configuration. The nucleic acid purification cartridge 2 and the nucleic acid amplification cartridge 3 also embody a number of innovations which enables the automated analysis of nucleic acid. Therefore, when the nucleic acid analyzer 1, the nucleic acid purification cartridge 2 and the nucleic acid amplification cartridge 3 are used, there is no procedure which must depend upon manual operation by the user other than setting the cartridges 2, 3 into the nucleic acid analyzer 1, throughout the entire operation of extracting nucleic acid and amplifying the nucleic acid. Therefore, remarkable reduction is achieved in the burden on the user in the nucleic acid analysis. Further, there is now no concern for different levels of skill among the users which may lead to poor repeatability due to inconsistency in the recovery rate of nucleic acid.

The present invention is not limited to the examples covered by the embodiment described above. The solid matrix, for example, of the nucleic acid extraction element may not necessarily be held horizontally or substantially horizontally with respect to the vertical axis of the holding member. The solid matrix may not necessarily be formed discal, and the way the holding member holds the solid matrix is not limited to penetration through the solid matrix. Further, the lid of the nucleic acid amplification cartridge may not necessarily be totally separable from the cartridge main body, and may open and close the upper opening of the reaction vessel as a non-detachable member of the cartridge main body.

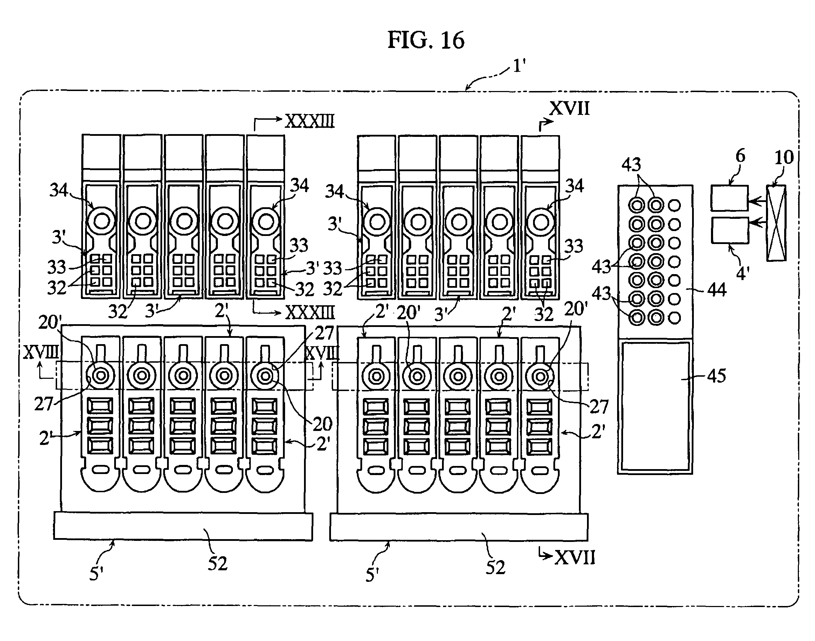

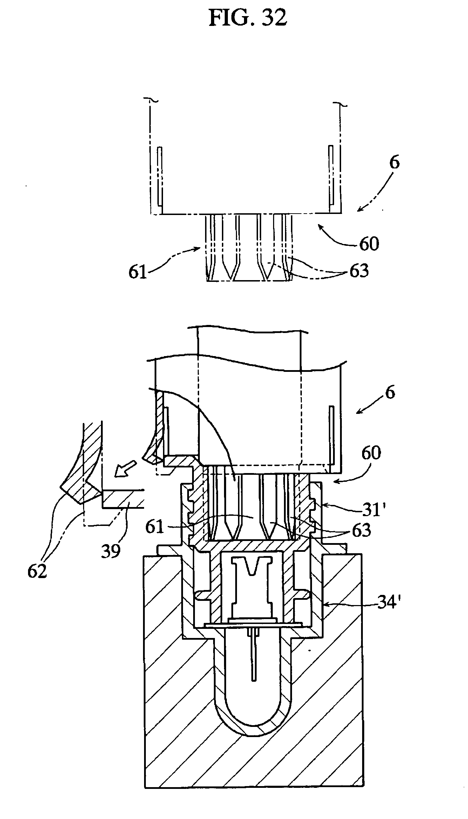

Next, description will be made for a second embodiment of the present invention, with reference to Fig. 16 through Fig. 33. Note however, that in the drawings referred to hereinafter, elements which are identical with or similar to those described in the first embodiment are indicated by the same reference codes, and description therefore will not be repeated.

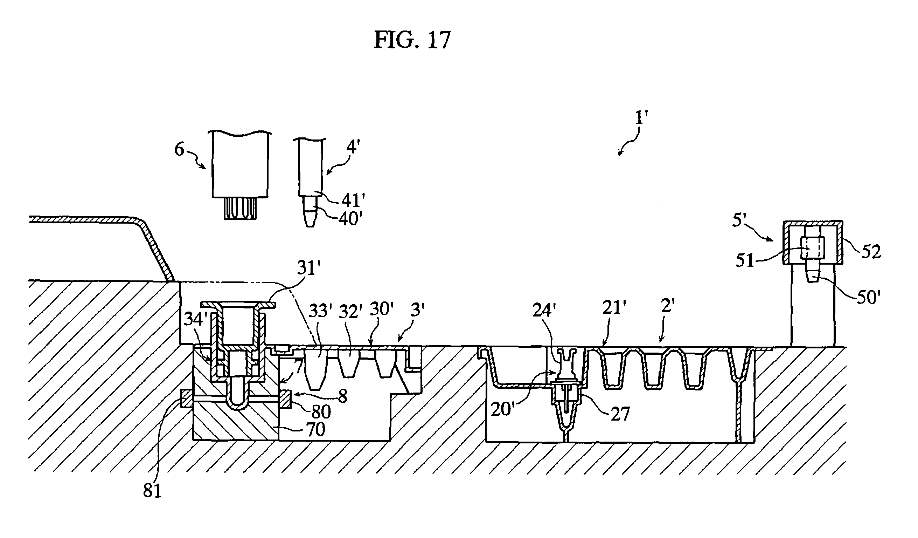

Fig. 16 through Fig. 18 show a nucleic acid analyzer 1'. Like the nucleic acid analyzer 1 (See Fig. 1 and others) which is already covered, when using this analyzer, a plurality of nucleic acid purification cartridges 2' and the same number of nucleic acid amplification cartridges 3' are set. As shown in Fig. 17, the apparatus includes a pipette unit 4' and a nucleic acid purifying operation mechanism 5'.

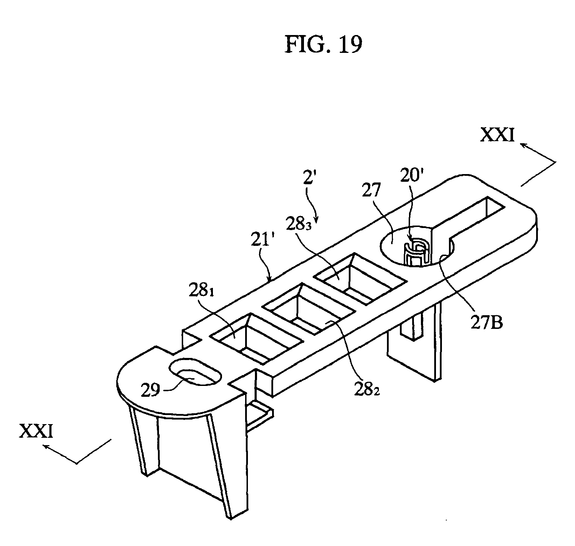

As shown in Fig. 19, the nucleic acid purification cartridge 2' is a component that enables automatic purification of nucleic acid in the nucleic acid analyzer 1', and includes a nucleic acid extraction element 20' and a cartridge main body 21'.

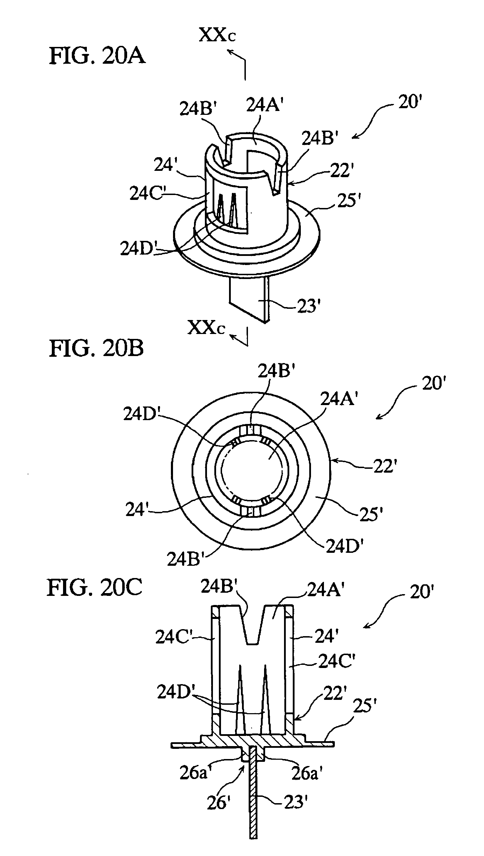

The nucleic acid extraction element 20' serves to support nucleic acid in the sample, and includes a holding member 22' and a solid matrix 23' as shown clearly in Fig. 20A through Fig. 20C. The holding member 22' has a cylindrical part 24', a flange 25', and a clip portion 26', and is formed entirely by resin molding for example.

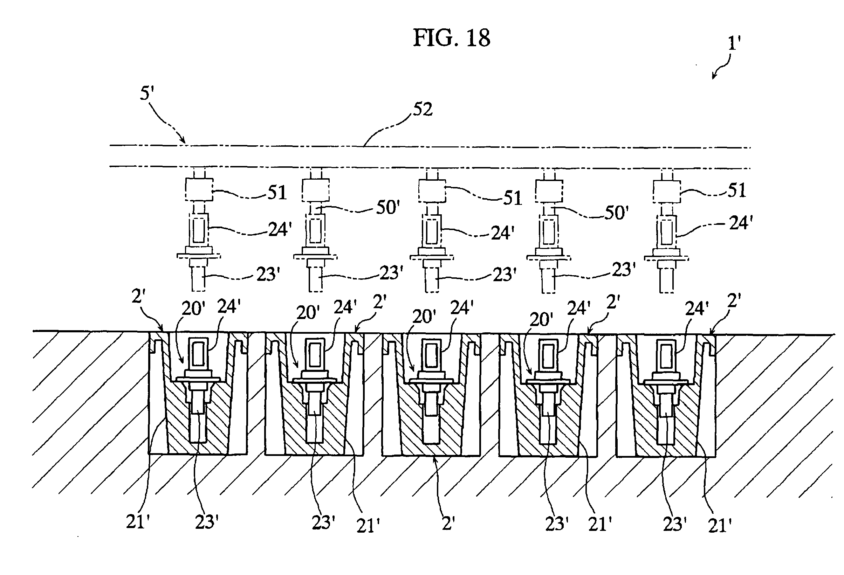

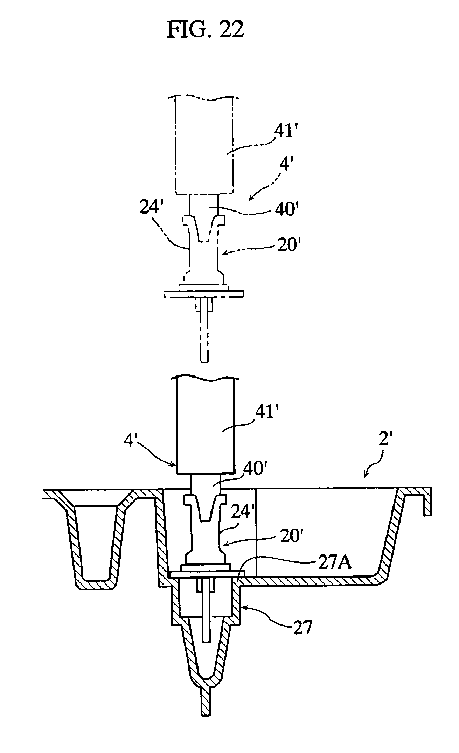

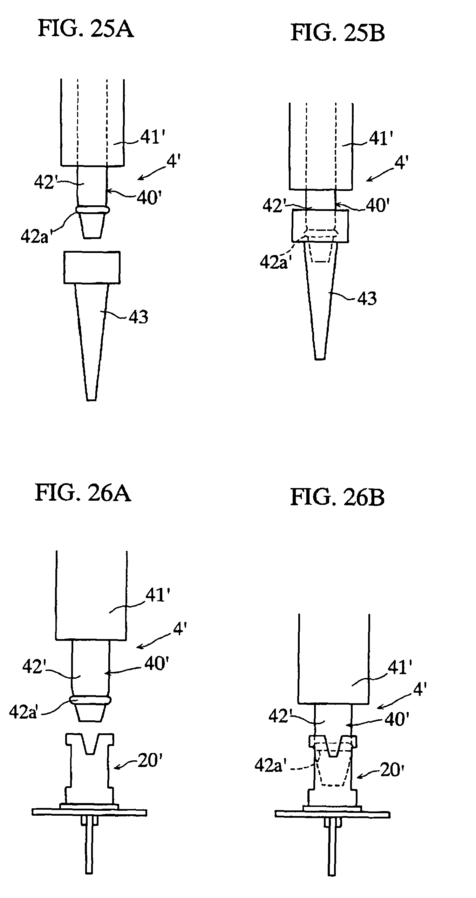

The cylindrical part 24' serves to move the nucleic acid extraction element 20' (See Fig. 18 and Fig. 22), and has a recess 24A', cutouts 24B', 24C', and a plurality of ribs 24D'. The recess 24A' serves to accept a tip portion 42' (See Fig. 26A and Fig. 26B) of a nozzle 40' in the pipette unit 4' to be described later or an insertion pin 50' of a nucleic acid purification mechanism 5' (See Fig. 18), and is formed in a columnar shape. The cutouts 24B', 24C' serve to give elasticity to the cylindrical part 24', and include a pair of V-shaped cutouts 24B' and a rectangular through hole 24C'. Specifically, when the recess 24A' is fitted by the tip portion 42' of the nozzle 40' or the insertion pin 50' (See Fig. 18 and Fig. 22), the cutouts 24B', 24C' exert an elastic force onto these members thereby ensuring the fit. When the recess 24A' is fitted by the tip portion 42' of the nozzle 40' or the insertion pin 50', the ribs 24D' exert a friction force onto these members thereby ensuring the fit. The ribs extend in up-and-down directions in an inner surface of the cylindrical part 24'.

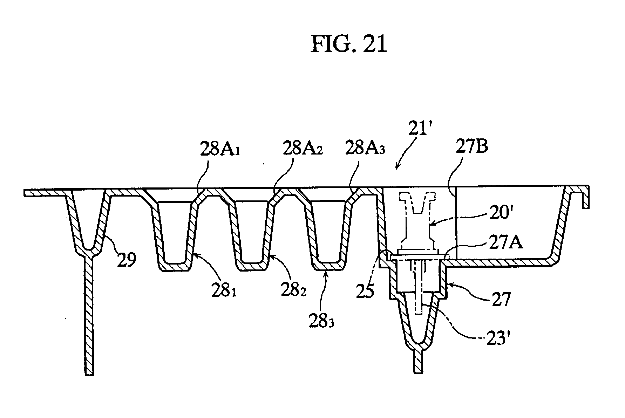

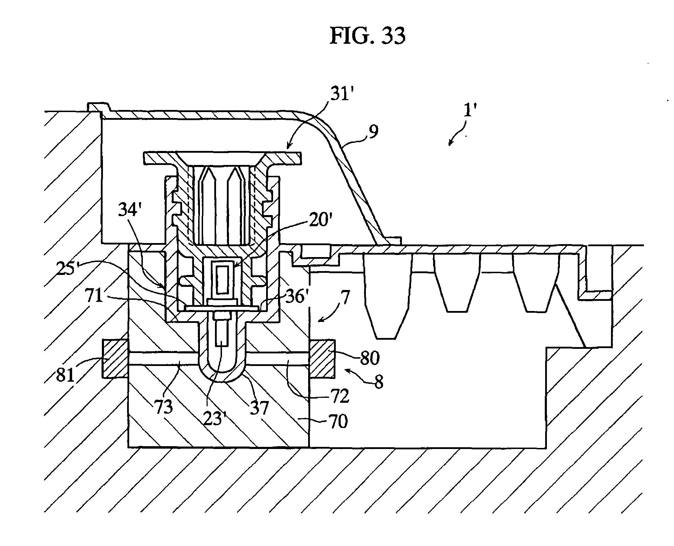

The flange 25' is formed in the shape of a ring extended radially outward. The flange 25' serves to sit into a stepped portions 27A', 36' provided at a target location when holding the nucleic acid extraction element 20' at the target location (a housing vessel 27 of the nucleic acid purification cartridge 2' and a reaction vessel 34' of the nucleic acid amplification cartridge 3') (See Fig. 21 and Fig. 33).

The clip portion 26', which clips an end of a solid matrix 23' to combine the solid matrix 23' with the holding member 22', is provided by a pair of clip blades 26a'. The clip blades 26a' should preferably be made to have as small area of contact with the solid matrix 23' as possible for increased recovery rate of the nucleic acid. The reason for this is, as will be described later, the nucleic acid is allowed to elute and is collected after allowing the solid matrix 23' to support nucleic acid, , but it is not easy to elute the nucleic acid from a portion of the solid matrix 23' pinched by the clip blades 26a'.

The solid matrix 23', which serves as a carrier of nucleic acid in the sample, is provided by e.g. a filter paper impregnated with reagents for extracting the nucleic acid. The solid matrix 23' is formed in the shape of a strip, having its end clipped by the clip portion 26' thereby suspended below the holding member 22'.

As shown in Fig. 19 and Fig. 21, the cartridge main body 21' includes a housing vessel 27, three cleansing vessels 28₁ through 28₃, and a sample holding vessel 29 similarly to the cartridge main body 21 (See Fig. 5 and Fig. 6) of the nucleic acid purification cartridge 2 which is described earlier, but does not include an surplus liquid removal vessel 21A (See Fig. 5 and Fig. 6). Obviously, the cartridge main body 21' may be provided with an surplus liquid removal vessel.

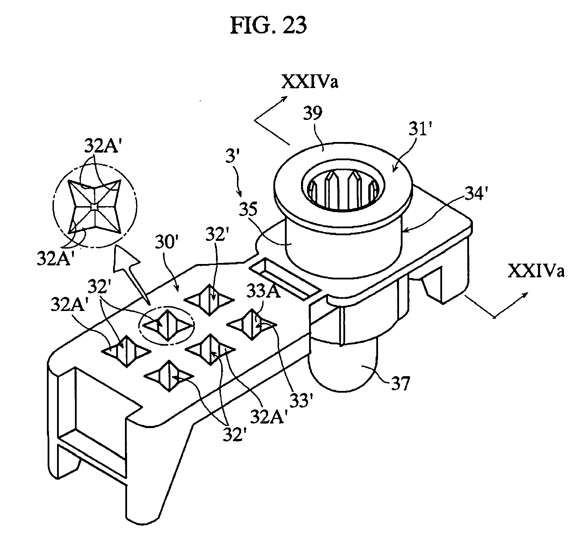

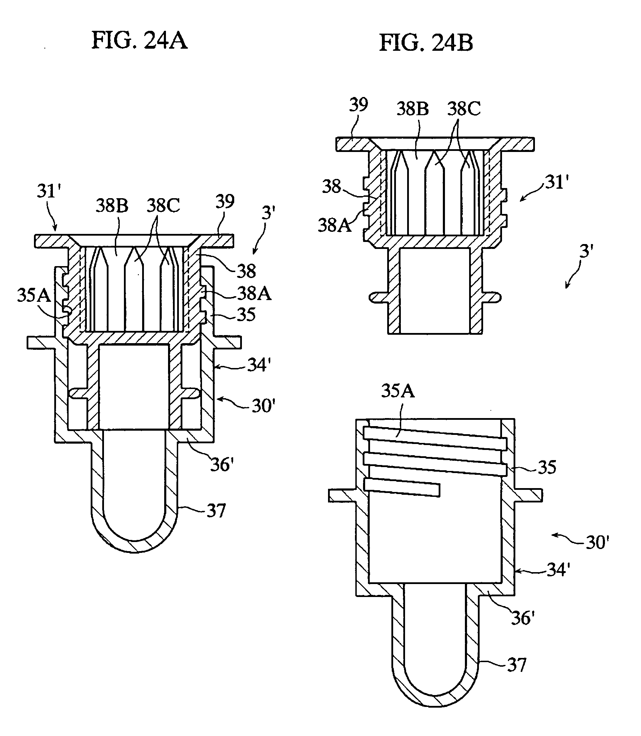

As shown in Fig. 23, Fig. 24A and Fig. 24B, the nucleic acid amplification cartridge 3', which enables automatic amplification and measurement of nucleic acid in the nucleic acid analyzer 1', includes a cartridge main body 30' and a lid 31'.

The cartridge main body 30' has five reagent vessels 32', a mixing vessel 33', and a reaction vessel 34', and these vessels 32', 33' and 34' are formed by e.g. resin molding, in a single piece.

Each reagent vessel 32 serves to hold a reagent or the like which is necessary for the amplification and measurement of nucleic acid, in the form of an aqueous solution or a suspension. Each reagent vessel 32' has a generally rectangular cross section. More accurately, four side surfaces 32A' have their center region protruded inward. Therefore, the reagent vessel 32' has its four corners acutely angled to be smaller than 90 degrees. This reduces a tendency that the reagent stay attached on the side walls 32' of the reagent vessel 32', enabling to keep the reagent to stay in the bottom region of the reagent vessel 32'. As a result, it becomes possible to make efficient use of the reagent held in the reagent vessel 32'. For example, when a very expensive reagent has to be used, the amount of the reagent dispensed in the reagent vessel 32' may be small, which enables to reduce production cost. Such an advantage is also obtained by providing grooves or ribs on the side surfaces 32A' of the reagent vessel 32'.

With the above, the kind of the reagents to be held by each of the reagent vessels 32' is selected in accordance with the amplification method and the measurement methods to be employed. Examples of the usable amplification method include PCR method, ICAN method, LAMP method and NASBA method.

The mixing vessel 33' is used when two or more regents held in the reagent vessels 32' are mixed with each other before supplying to the reaction vessel 34'. Like the reagent vessel 32' which was described above, the mixing vessel 33' also has acutely angled four corners smaller than 90 degrees. Obviously, side surfaces 33A' of the mixing vessel 33' may be provided with grooves or ribs.

The reaction vessel 34' serves to hold a reagent mix and the nucleic acid extraction element 20, and provides a reaction space for reactions between the nucleic acid supported by the nucleic acid extraction element 20' and the reagent mix prepared in the mixing vessel 33' (See Fig. 33). The reaction vessel 34' has a cylindrical part 35, a reaction detection part 37, and a stepped portion 36' provided therebetween. The stepped portion 36' serves as a seat for the flange 25' of the nucleic acid extraction element 20' (See Fig. 33), and is provided by reducing the diameter of the reaction detection part 37 to be smaller than the diameter of the cylindrical part 35.

The lid 31', which determines whether the inside space of the reaction detection part 37 is sealed or not, is attachable/detachable to and from the reaction vessel 34' (cylindrical part 35). More specifically, the lid 31' can be turned to thread into the cylindrical part 35 (reaction vessel 34) or completely detached from the cylindrical part 35. Like the lid 31 of the nucleic acid amplification cartridge 3 described earlier (See Fig. 9), the lid 31' includes a cylindrical main body part 38 and a flange 39. However, in the nucleic acid analyzer 1', the nucleic acid extraction element 20' is moved by using a nozzle 40' of a pipette unit 4', and for this reason, lid 31' does not include the holding portion 36 (See Fig. 7B and Fig. 9) which is included in the lid 31 of the nucleic acid amplification cartridge 3 described earlier.

Fig. 16 and Fig. 17 show a pipette unit 4', which serves primarily to prepare a compound liquid in the nucleic acid amplification cartridge 3' and to move the compound liquid to the reaction vessel 34'. As shown in Fig. 25 through Fig. 28, the pipette unit 4' includes a nozzle 40' and a removal member 41'.

The nozzle 40' is capable of sucking/discharging a liquid and movable in up-and-down directions and horizontal directions to reach the reagent vessels 32', the mixing vessel 33' the reaction vessel 34' in the nucleic acid amplification cartridge 3', and the housing vessel 27 in the nucleic acid purification cartridge 2' (See Fig. 16 and Fig. 17). When the nozzle 40' is used in preparation of a mixed sample or dispensing the mixed sample into the reaction vessel 34' (reaction detection part 37), a tip 43 is attached to a tip portion 42', as shown in Fig. 25A and Fig. 25B. In the nozzle 40', an O-ring 42a' is fitted to a location on the tip portion 42' where the tip 43 is attached, for increased sealing between the tip portion 42' and the tip 43 when the tip portion 42' is fitted with the tip 43.

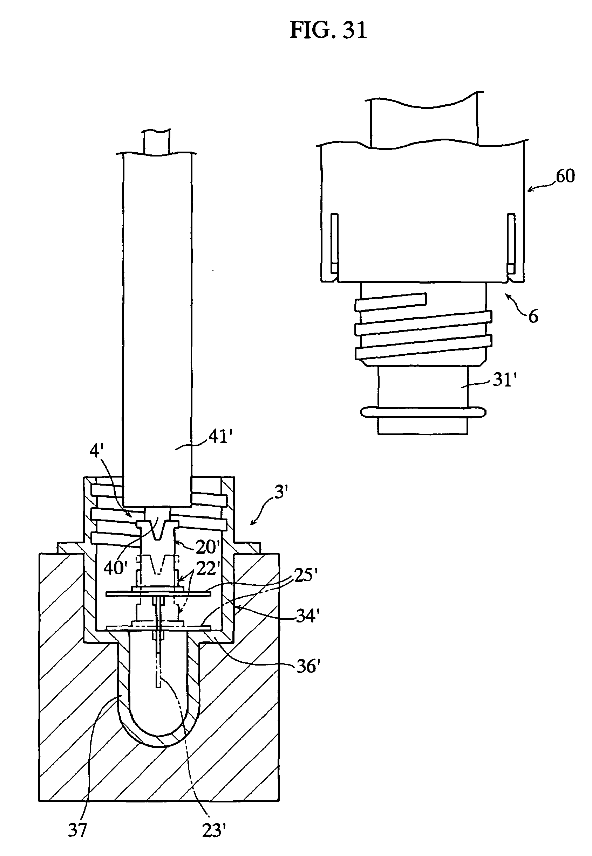

As shown in Fig. 22, the pipette unit 4' also serves to take the nucleic acid extraction element 20' out of the housing vessel 27 of the nucleic acid purification cartridge 2', and to move the nucleic acid extraction element 20' to the reaction vessel 34' of the nucleic acid amplification cartridge 3' as shown in Fig. 31. For such an operation, the nucleic acid extraction element 20' is attached to the tip portion 42' of the nozzle 40' as shown in Fig. 26A and Fig. 26B.

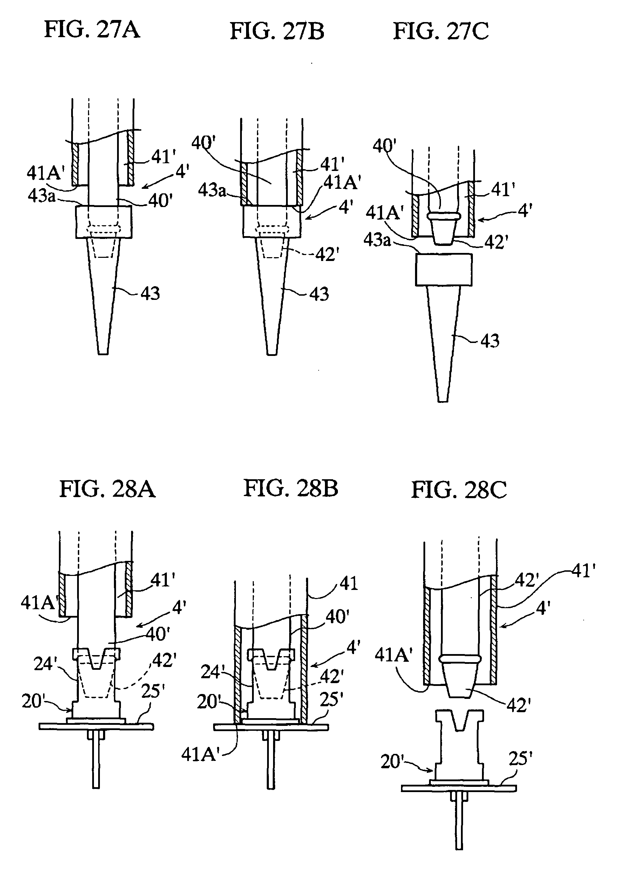

As shown in Fig. 27 and Fig. 28, the removal member 41' serves to remove the tip 43 or the nucleic acid extraction element 20' from the tip portion 42' of the nozzle 40'. The removal member 41' sheathes the nozzle 40' and is movable in up-and-down directions independently from the nozzle 40'. Specifically, the removal member 41' resides above an end surface 43a of the tip 43 or the flange 25' of the nucleic acid extraction element 20' (stand-by position) any time except when removing the tip 43 or the nucleic acid extraction element 20' from the tip portion 42' of the nozzle 40', whereas it is moved down relatively below the nozzle 40' when removing them. As the removal member 41' is moved in the downward direction from the stand-by position beyond a predetermined distance, an end surface 41A' of the removal member 41' interferes with an end surface 43a of the tip 43 or the flange 25' of the nucleic acid extraction element 20', exerting a downward force onto the tip 43 or the nucleic acid extraction element 20', removing the tip 43 or the nucleic acid extraction element 20' from the tip portion 42' of the nozzle 40'.

As shown in Fig. 16 through Fig. 18, the nucleic acid purifying operation mechanism 5' serves to control operation of the nucleic acid extraction element 20' when nucleic acid in the sample is extracted by using the nucleic acid extraction element 20'. Like the nucleic acid purifying operation mechanism 5 of the nucleic acid analyzer 1 described earlier (See Fig. 2 through Fig. 4), the nucleic acidpurifying operation mechanism 5' includes a plurality of insertion pins 50', cylindrical bodies 51 and a support frame 52. However, each insertion pin 50' is shaped like the tip portion 42' of the nozzle 40' for appropriate fitting into the cylindrical part 24' of the nucleic acid extraction element 20'.

Next, description will cover an operation in the nucleic acid analyzer 1'.

The nucleic acid analyzer 1' automatically performs purification, amplification and measurement once nucleic acid purification cartridges 2' and nucleic acid amplification cartridges 3' are set to the nucleic acid analyzer 1' as shown in Fig. 16 through Fig. 18 and settings are made for the number and the type of cartridges 2', 3' (purification method, amplification method and measurement method).

As shown in Fig. 18, purification of nucleic acid is performed in the nucleic acidpurification cartridge 2' by moving the nucleic acid extraction element 20' using the nucleic acid purifying operation mechanism 5'. More specifically, first, the insertion pins 50' of the nucleic acid purifying operation mechanism 5' are fitted into corresponding cylindrical parts 24' of the nucleic acid extraction elements 20' so that the plurality of nucleic acid extraction elements 20' can be moved all together. Under this condition, the nucleic acid purifying operation mechanism 5' soaks the solid matrices 23' of the nucleic acid extraction elements 20' into samples, allowing each solid matrix 23' to be impregnated with nucleic acid in the sample.

Finally, the solid matrices 23' are soaked sequentially into cleansing liquids in the three cleansing vessels 28₁ through 28₃ (See Fig. 19). More specifically, cleansing of the solid matrices 23' is performed by moving the solid matrices 23' in up-and-down directions repeatedly in each of the cleansing vessels 28₁ through 28₃ (SeeFig. 19) by the nucleic acid purifying operation mechanism 5'. In this step, the nucleic acid purifying operation mechanism 5' is controlled to repeat a cycle of a state in which the solid matrices 23' are completely submerged into the cleansing liquid and a state in which the solid matrices 23' are above the surface of the cleansing liquids. According to the cleansing method as this, it is possible to remove impurities efficiently from the solid matrices 23. This enables to effectively reduce inhibition caused by the impurities to the amplification of nucleic acid to be performed in the amplification of nucleic acid, and thereby to perform the analysis of the nucleic acid accurately.

It should be appreciated that after the completion of the cleansing, the solid matrices 23' may be dried by air blow as held by the nucleic acid purifying operation mechanism 5'. After completing the cleansing (or drying by air depending upon the case) of the solid matrices 23', the nucleic acid extraction elements 20' are detached from the insertion pins 50', and the nucleic acid extraction elements 20 are re-placed into the housing vessels 27 in the nucleic acid purification cartridge 2' (See Fig. 19 and Fig. 21).

As described, according to the nucleic acid purification cartridge 2', the target nucleic acid is moved easily in the nucleic acid analyzer 1' byusinga solid (nucleic acidextraction element 20') which supports the target nucleic acid. In this regards, the nucleic acid purification cartridge 2' contributes to automated analysis of nucleic acid.

Amplification of nucleic acid is performed by preparing a reagent mix in the nucleic acid amplification cartridge 3', dispensing the mixture into the reaction vessel 34' in the nucleic acid amplification cartridge 3', and then moving the solid matrix 23' which supports the nucleic acid into the reaction vessel 34' together with the holding member 22'. It should be noted that if the reagent mix and the solid matrix 23' are held together in the reaction vessel 34' as shown in Fig. 33, temperature control is provided to the heat block 70 in accordance with the amplification method employed, whereby temperature control is provided to the reaction vessel 34'.

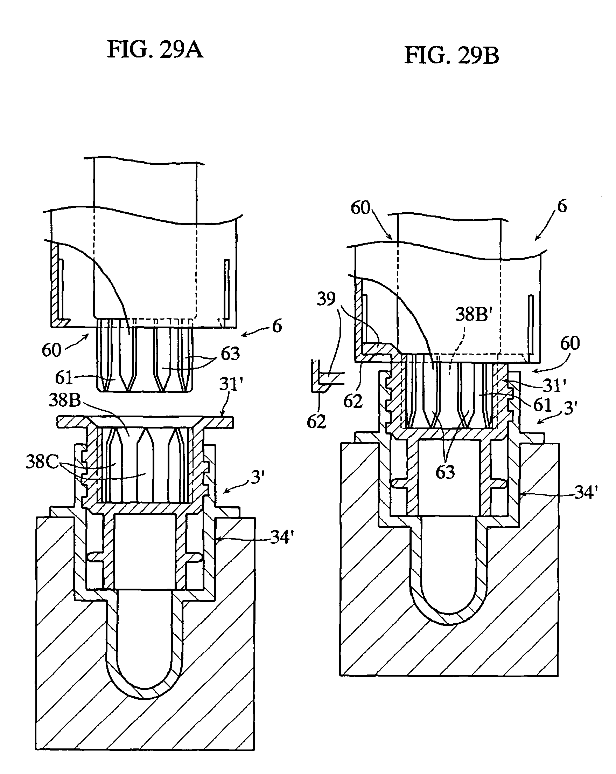

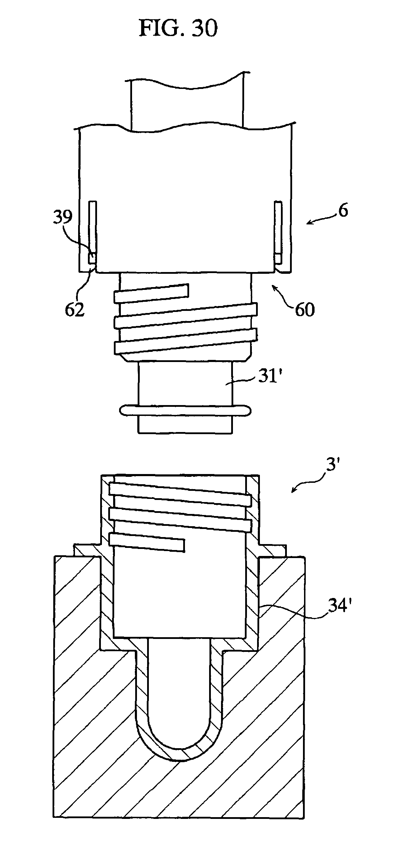

Preparing of the reagent mix and dispensing of the reagent mix to the reaction vessel 34' are performed by the pipette unit 4' like in the nucleic acid analyzer 1 described earlier (See Fig. 1 and so on). Note that before dispensing the reagent mix to the reaction vessel 34', the lid 31' must be removed from the reaction vessel 34' by the lid attaching/removing mechanism 6. Such a removal of the lid 31' is performed as shown in fig. 29 and Fig. 30, by inserting the turning member 60 of the lid attaching/removing mechanism 6 into the recess 38B' of the lid 31', and then lifting the turning member 60 while it is rotated. When the turning member 60 is inserted into the recess 38B', the hooks 62 of the turning member 60 engage with the flange 39' of the lid 31', and therefore, it is possible to move the lid 31' whichwas removed from the reaction vessel 34' together with the turning member 60. As exemplified, the nucleic acid analyzer 1' and the nucleic acid amplification cartridge 3' embody innovations for easy and reliable removal of the lid 31' from the nucleic acid amplification cartridge 3' toward the goal of automated amplification of nucleic acid and further, fully automated analysis of the nucleic acid.

On the other hand, moving of the solid matrix 23' into the reaction vessel 34' is accomplished by a series of operations such as removing of the nucleic acid extraction element 20' from the housing vessel 27 of the nucleic acid purification cartridge 2' (See Fig. 22), moving of the nucleic acid extraction element 20' to the reaction vessel 34' in the nucleic acid amplification cartridge 3' and removing of the nucleic acid extraction element 20' from the nozzle 40' (See Fig. 28 and Fig. 31).

As shown in Fig. 22, the removal of the nucleic acid extraction element 20' is accomplished by first moving the nozzle 40' right above the housing vessel 27 in the nucleic acid purification cartridge 2', and then by lowering the nozzle 40' to engage the tip portion 42' of the nozzle 40' with the cylindrical part 24' of the nucleic acid extraction element 20', and then lifting the nozzle 40'. In this step, note that the cylindrical part 24' is formed with the cutouts 24B', 24C' such as the V-shaped cutouts 24B' and the rectangular through hole 24C' (See Fig. 20A through Fig. 20C). Therefore, when the tip portion 42' of the nozzle 40' is fitted into the cylindrical part 24', it is possible to apply appropriate elastic force to the tip portion 42'. This ensures appropriate holding of the nucleic acid extraction element 20' in the cylindrical part 24', with respect to the tip portion 42' of the nozzle 40'.

The movement of the nucleic acid extraction element 20' is made by moving the nozzle 40' while the nucleic acid extraction element 20' is held by the tip portion 42' of the nozzle 40'.

As shown in Fig. 28 and Fig. 31, the removal of the nucleic acid extraction element 20' is accomplished by first moving the tip portion 42' of the nozzle 40' to inside the reaction vessel 34' together with the nucleic acid extraction element 20', and then lowering the removal member 41' relatively below the nozzle 40'. Specifically, when the removal member 41' is moved downward, the removal member 41' interferes with the flange 25' of the nucleic acid extraction element 20', applying a downward force to the flange 25' i.e. to the nucleic acid extraction element 20' to remove the nucleic acid extraction element 20' from the tip portion 42' of the nozzle 40'.

As described, according to the nucleic acid analyzer 1', it is possible to move the nucleic acid extraction element 20' by using the nozzle 40' and the removal member 41' which is a mechanism needed for preparation of samples. Since one of the components (pipette unit 4) which is essential for performing purification of nucleic acid and amplification of the nucleic acid within a single piece of equipment serves for a multiple of tasks, complexity of the apparatus is avoided. Also, this enables to reduce increase in the number of operation mechanisms which need to be controlled in the apparatus, offering another advantage in reducing complexity and size increase of the apparatus.

As shown in Fig. 31, the nucleic acid extraction element 20', which is removed from the tip portion 42' of the nozzle 40', is seated on its flange 25' of the holding member 22' onto the stepped portion 36' of the reaction vessel 34'. In this step, the solid matrix 23' placed in the reaction detection part 37 has its lower end above the bottom of the reaction detection part 37 by a predetermined distance. The reaction detection part 37 already has the reagent mix in it, so the solid matrix 23' is entirely soaked in the reaction detection part 37, whereby nucleic acid elutes from the solid matrix 23' and the eluted nucleic acid reacts with the reagents and is amplified.

As described, the lower end of the solid matrix 23' is above the bottom of the reaction detection part 37. More specifically, the solid matrix 23' has its lower end placed at a position not interrupting the travel of the exciting light to the reaction detection part nor interfering with the measurement of the fluorescent light by the photometry mechanism 8 (See Fig. 33). Therefore, even if the nucleic acid is supported by a solid support, the solid support does not prevent the nucleic acid measurement.

As shown in Fig. 33, the measurement of the nucleic acid is performed after re-attaching the lid 31' of the reaction vessel 34', by the photometry mechanism 8 while the reaction vessel 34' is covered by a light shielding member 9 from above. The photometry mechanism 8 performs essentially the same operation as described earlier for the nucleic acid analyzer 1 (See Fig. 1 and so on) when measuring the nucleic acid.

As has been described thus far, according to the nucleic acid analyzer 1', again, it is possible to perform automated analysis of nucleic acid simply by setting the nucleic acid purification cartridge 2' and the nucleic acid amplification cartridge 3' of the above-described configuration, just like in the nucleic acid analyzer 1 (See Fig. 1, etc.) Therefore, there is no portion which must depend upon manual operation by the user other than setting the cartridges 2', 3' to the nucleic acid analyzer 1', throughout the entire operation of extracting nucleic acid and amplifying the nucleic acid. Therefore, remarkable reduction is achieved in the burden on the user in the nucleic acid analysis, and further, there is now no concern for different levels of skill among the users which may cause poor repeatability due to inconsistency in the recovery rate of nucleic acid.

### [Examples]

In the following examples, a nucleic acid purification cartridge, a nucleic acid amplification cartridge and a nucleic acid analyzer according to the first embodiment were employed to test if a target nucleic acid provided by a human genome DNA is appropriately purified and amplified. The test method used was SNP (Single Nucleotide Polymorphism) typing.

### Example 1

### (Formation of Nucleic Acid Purification Cartridge)

The nucleic acid purification cartridge was formed in the following steps: The cartridge main body (reference code 21 in the drawings) and the nucleic acid extraction element (reference code 20 in the drawings) were formed in the method described in the next paragraph; then, the nucleic acid extraction element was placed in the housing vessel of the cartridge main body (reference code 27 in the drawings), and water absorbing members (reference codes 21Ad, 21Ae in the drawings) provided by a resin foam (Urethane Foam SAQ, manufactured by INOAC CORPORATION) were fixed in the surplus liquid removal vessel (reference code 21A in the drawings). The size of the water absorbing member 21Ad was 5 mm x 8 mm x 17 mm, while the size of the water absorbing members 21Ae was 5 mm x 11 mm x 14 mm.

The cartridge main body was formed of PET, using resin injection molding, into a shape shown in Fig. 5 and Fig. 6. The nucleic acid extraction element was formed by allowing the holding member (reference code 22 in the drawings) to hold a solid matrix (reference code 23 in the drawings). The solid matrix was formed by punching FTA Classic Card (Whatman plc, Cat. No. WB120205) into a disc having a 2.5 mm diameter. FTA Classic Card is a nucleic acid collection filter paper made primarily of cellulose. The holding member was formed of a PET by resin injection molding into the shape in Fig. 7A and Fig. 7B. Note, however, that upon the resin injection molding, the holding member was not formed with the holding tab (reference code 26C in the drawings). The holding tab was made by first creating a hole in the center of the solid matrix, inserting the matrix through the pin-shaped portion (reference code 26B in the drawings) of the holding member, and then thermally deforming the tip portion of the pin-shaped portion. As described earlier, the holding tab prevents the solid matrix from slipping out of the pin-shaped portion.

### (Formation of Nucleic Acid Amplification Cartridge)

As for the nucleic acid purification cartridge, the cartridge main body (reference code 30 in the drawings) and the lid (reference code 31 in the drawings) were formed of a PET by resin injection molding into the shapes shown in Fig. 8 and Fig. 9. After that, the lid was threaded into the cartridge main body reaction vessel (reference code 34 in the drawings).

### (Purification of Nucleic Acid)

Purification of the nucleic acid was performed automatically by the nucleic acid analyzer, after dispensing a sample (reference code 29L in the drawings) into the sample holding vessel (reference code 29 in the drawings) of the nucleic acid purification cartridge main body, dispensing a cleansing liquid (reference code 28L₁ through 28L₃ in the drawings) to each of three cleansing vessels (reference code 28₁ through 28₃), and then setting the nucleic acid purification cartridge into the nucleic acid analyzer (reference code 1 in the drawings).

The sample was provided by whole blood (mixed with an anticoagulant Heparin Na), and the amount pipetted was 120 µL. The cleansing liquid 28L₁ was provided by Cleansing liquid I (800 µL) in the following table, the cleansing liquid 28L₂ was provided by Cleansing liquid I (600 µL) in the following table and the cleansing liquid 28L₃ was provided by Cleansing liquid II (600 µL) in the following table.

**[Table 1]**

| | Composition | | pH |
|---|---|---|---|
| Cleansing Liquid I | 10mM Tris-HCl | 1mM EDTA | 8.0 |
| Cleansing Liquid II | 10mM Tris-HCl | 0.1mM EDTA | 8.0 |

In the nucleic acid analyzer, the nucleic acid purifying operation mechanism (reference code 5 in the drawings) was driven so that the nucleic acid extraction element (solid matrix) would follow an operation described below:
First, the insertionpin (reference code 50 in the drawings) of the nucleic acid purifying operation mechanism was inserted into the cylindrical part (reference code 24 in the drawings) of the holding member, and the solid matrix was soaked into the whole blood in the sample holding vessel. Next, the solid matrix was cleansed in the three cleansing vessels 28₁ through 28₃. The cleansing of the solid matrix was performed by sequentially using the cleansing vessels 28₁ through 28₃ in the order of: cleansing vessel 28₁ → cleansing vessel 28₂ → cleansing vessel 28₃. The cleansing of the solid matrix in the cleansing vessel 28₁ was performed by repeating a cycle of lifting the solid matrix 23 entirely above the liquid surface of the cleansing liquid 28L₁ and lowering it entirely below the surface of the liquid 28L₁ for a period of one minute at a frequency of 20 Hz. On the other hand, the cleansing cycles for the solid matrix in the cleansing vessels 28₂, 28₃ were performed for a period of two minutes, with all the other operating conditions being the same as in the cleansing vessel 28₁.

Next, extra components which can inhibit the nucleic acid ampl i f icat ion react ion to take place in the next step were removed. The removal of the extra components was performed by pressing the solid matrix and a tip part of the holding portion (the holding tab, the pin-shaped portion and tapered portion (reference code 26 in the drawings)) onto the water absorbing members (reference code 21Ad, 21Ae in the drawings).

### (Verification of Nucleic Acid Amplification)

The amplification of the nucleic acid was verified by PCR method using two reagent compound liquids A, B listed in the following Table 2. The degree of amplification of the nucleic acidwasverifiedbySNP (Single Nucleotide Polymorphism) typing of the base sequence CYP2C19*2*3 which is a code for drug-metabolizing enzyme.

**[Table 2]**

| **Reagent Mix A** | **40µL** |
|---|---|
| Sterile Distilled Water | 35.6 µL |
| 10xGene Taq Universal Buffer (Mg free) (Manufactured by: Nippon Gene Co., Ltd.) | 4 µL |
| 5 units/*µ*l Gene Taq FP | 0.4 µL |

| **Reagent Mix B** | **40 µL** |
|---|---|
| Sterile Distilled Water | 5.6 µL |
| 10×Gene Taq Universal Buffer (Mg free) (Manufactured by: Nippon Gene Co., Ltd.) | 4 µL |
| 40% Glycerol liquid | 20 µL |
| 100mMMgCl₂ liquid (Mfg: Nippon Gene Co., Ltd.) | 1.2 µL |
| 2.5mM dNTP Mixture (Mfg: Nippon Gene Co., Ltd.) | 6.4 µL |
| 100µM CYP2C19*2 F-Primer (Sequence Number 1) | 0.4 µL |
| 100µM CYP2C19*2 R-Primer (Sequence Number 2) | 0.2 µL |
| 100µM CYP2C19*3 F-Primer (Sequence Number 3) | 0.2 µL |
| 100µM CYP2C19*3 R-Primer (Sequence Number 4) | 0.4 µL |
| 5µM CYP2C19*2 probe (Sequence Number 5) | 0.8 µL |
| 5µM CYP2C19*3 probe (Sequence Number 6) | 0.8 µL |
| Sequence Number 1: gttttctcttagatatgcaataattttccca | |
| Sequence Number 2: cgagggttgttgatgtccatc | |
| Sequence Number 3: gaaaaattgaatgaaaacatcaggattgta | |
| Sequence Number 4: gtacttcagggcttggtcaata | |
| Sequence Number 5: ttatgggttcccgggaaataatc-(BODIPY-FL) | |
| Sequence Number 6: gcaccccctggatcc-(TAMRA) | |

More specifically, the verification of the nucleic acid amplification was performed automatically in the nucleic acid analyzer (reference code 1 in the drawings), after pipetting the reagent compound liquid A or the reagent compound liquid B individually to the reagent vessel (reference code 32₁, 32₂ in the drawings) of the nucleic acid amplification cartridge main body, and then setting the nucleic acid amplification cartridge in the nucleic acid analyzer.

In the nucleic acid analyzer, the pipette unit (reference code 4), the lid attaching/removing mechanism (reference code 6 in the drawings) and the temperature controlling mechanism (reference code 7) were driven so that the nucleic acidextraction element (solid matrix) would follow an operation described below:
First, after the tip (reference code 43) was attached to the nozzle (reference code 40) of the pipette unit, the mixing vessel (reference code 33 in the drawings) was loaded with 30 µL of the reagent compound liquid A from the reagent vessel 33A and 30 µL of the reagent compound liquid B from the reagent vessel 33B. Next, using a siphon operation of the nozzle, the reagent compound liquids A, B were agitated to mix with each other for use as a reaction liquid. Then, using the nozzle, 50 µL of the reaction liquid was dispensed to the reaction vessel (reference code 34 in the drawings).

Meanwhile, the turning member (reference code 60 in the drawings) of the lid attaching/removing mechanism removed the lid (31 in the drawings) from the nucleic acid amplification cartridge. The lid was moved to bring its latching pawls (reference code 36A in the drawings) in engagement with the engagement head (reference code 24B in the drawings) of the nucleic acid extraction element, to connect the two components together.

Next, while the lid attaching/removing mechanism was placing the assembly of the lid and the nucleic acid extraction element 20 into the reaction vessel (reference code 34 in the drawings) in the nucleic acid amplification cartridge, the turning member was turned to close the lid of the reaction vessel, whereby the solid matrix was sealed into the reaction vessel (34 in the drawings) while it was completely submerged in the reaction liquid.

Next, the heat block (reference code 70 in the drawings) of the temperature controlling mechanism was driven to change the temperature of the reaction liquid in the reaction vessel, whereby amplification of the target nucleic acid was performed. Temperature change was performed in the following pattern: 120 seconds at 95°C → 50 cycles of (4 seconds at 95°C+60 seconds at 54°C) → 60 seconds at 95°C → 90 seconds at 45°C.

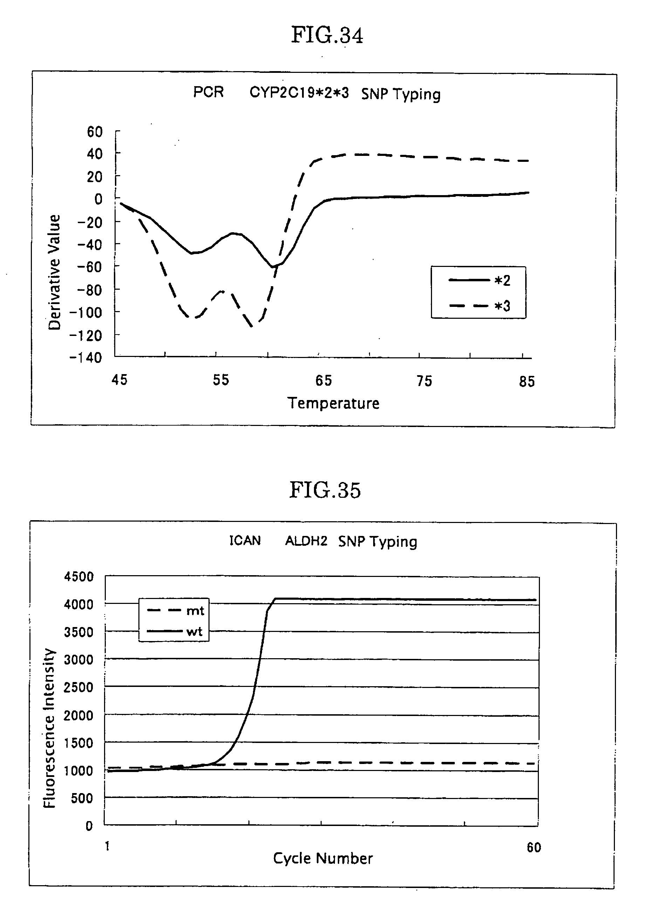

In the SNP typing, Tm analysis was employed. In the Tm analysis, temperature of reaction liquid containing the amplified nucleic acid was increased from 45°C to 95°C at a rate of 1°C per 3 seconds, and real-time fluorescence intensity measurement was performed. The measurement was made for two wavelength spectra of: 515 through 555 nm (*2) and 585 through 750 nm (*3). The SNP typing was made for each of the wavelengths ((*2), (*3)). Results of the fluorescence intensity measurements at each wavelength are given in Fig. 34, with the horizontal axis representing the temperature, and the vertical axis representing the derivative value (rate of change) of the fluorescence intensity.

As understood from Fig. 34, in whichever of the wavelengths *2 and *3, the change curve of the derivative value (rate of change) for the measured fluorescence intensity shows two peaks. These peaks represent SNP wild-type and mutation-type, demonstrating that the target nucleic acid was amplified to a satisfying extent where these two types are differentiated from each other.

### Example 2

In this Example, purification of nucleic acid was performed in the same way as in Example 1. Amplification was performed by using ICNA method, and then SNP typing was performed. An amplification reagent employed was Cycleave ICAN human ALDH2 Typing Kit (Cat. No. CY101) manufactured by TaKaRa Inc. The amount and composition of the reagent compound liquids A, B held in the reagent vessels (reference code 32₁, 32₂ in the drawings) of the cartridge main body were as shown in Table 3. The amount pipetted and conditions for mixing these reagent compound liquids A, B, and the mount of the reaction liquid pipetted were the same as in Example 1.

**[Table 3]**

| **Reagent Mix A** | **40 µL** |
|---|---|
| Sterile Distilled Water | 15.2 µL |
| 2× ICAN Reaction Buffer | 20 µL |
| RNase H | 1.6 µL |
| *Bca*BEST DNA Polymerase | 3.2 µL |

| **Reagent Mix B** | **40 µL** |
|---|---|
| Sterile Distilled Water | 13.6 µL |
| 2× ICAN Reaction Buffer | 20 µL |
| ALDH2 ICAN Primer Mix | 3.2 µL |
| ALDH2 Probe Mix | 3.2 µL |

### (Reaction Conditions)

The reaction was allowed for an hour after the solid matrix was incubated for 300 seconds at 70°C while being kept in the reaction liquid. The one-hour reaction was made of 60 cycles, each cycle including a first step of 30 seconds without fluorescence intensity measurement, and a second step of 30 seconds with fluorescence intensity measurement. The fluorescence intensity measurement performed in the second step of each cycle was real-time measurement. The measurement was made for two wavelengths of 515 through 555 nm (mt) and 585 through 750nm (wt), and SNP typing was made for each of the SNP mutation-type and wild-type. Results of the fluorescence intensity measurements at each wavelength are given in Fig. 35, with the horizontal axis representing the number of cycles, and the vertical axis representing the fluorescence intensity.

As understood from Fig. 35, after a lapse of a certain number of cycles, the fluorescence intensity which represents the SNP mutation-type increased but the fluorescence intensity which represents the SNP wild-type showed little increase even if the number of cycles was increased. Therefore, the result shown in Fig. 35 demonstrates that the target nucleic acid was amplified selectively and sufficiently, to an extent where these two types are differentiated from each other.

### Example 3

In this Example, purificationof nucleic acid was performed in the same way as in Example 1. Amplification was made by LAMP method, and results were tested by SNP typing. An amplification reagent employed was Loopamp P450 typing reagent kit (CYP2C9*3) manufactured by Eiken Chemical Co., Ltd. The composition of the reagent compound liquids A, B held in the reagent vessels (reference code 33A, 33B in the drawings) of the cartridge main body were as shown in Table 3. The amount pipetted and conditions for mixing these reagent compound liquids A, B, and the mount of the reaction liquid pipetted were the same as in Example 1.

**[Table 4]**

| **Reagent Mix A** | **40 µL** |
|---|---|
| Sterile Distilled Water | 9.6 µL |
| Reaction Mix. SNP | 16 µL |
| Fluorescent Detection Reagent for Genome | 3.2 µL |
| 10mM Tris Solution: PH8.0 | 8 µL |
| Bst DNA Polymerase | 3.2 µL |

| **Reagent Mix B** | **40 µL** |
|---|---|
| Sterile Distilled Water | 11.2 µL |
| Reaction Mix. SNP | 16 µL |
| Primer Mix. for 2C9*3(C) or Primer Mix. for 2C9*3(A) | 12.8 µL |

### (Reaction Conditions)

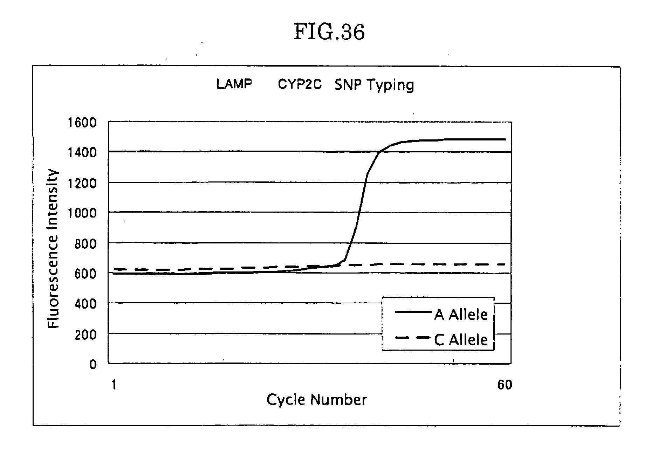

The reaction was allowed for five minutes at 95°C and then for an hour at 60°C with the solid matrix being kept in the reaction liquid. The one-hour reaction was made of 60 cycles, each cycle including a first step of 30 seconds without fluorescence intensity measurement, and a second step of 30 seconds with fluorescence intensity measurement. The fluorescence intensity measurement performed in the second step of each cycle was real-time measurement for a wavelength of 515 through 555 nm. Results of the fluorescence intensity measurements at the second step of each cycle are given in Fig. 36, with the horizontal axis representing the number of cycles, and the vertical axis representing the fluorescence intensity.

As understood from Fig. 36, after a lapse of a certain number of cycles, the fluorescence intensity which represents the SNP mutation-type (Allele A in the figure) increased but the fluorescence intensity which represents the SNP wild-type (Allele G in the figure) showed little increase even if the number of cycles was increased. Therefore, the result shown in Fig. 36 demonstrates that the target nucleic acid (SNP wild-type) was amplified selectively and sufficiently, to an extent where these two types are differentiated from each other.

As understood from the results of Examples 1 through 3, purification of nucleic acid performed in the nucleic acid extraction element according to the first embodiment of the present invention enables appropriate amplification of a target nucleic acid not only when PCR method was used but also when ICAN method or LAMP method was used as the amplification method. As described earlier, ICAN method and LAMP method are not capable of inducing sufficient amplification reaction if a target nucleic acid has not been purified to an appropriately high level. Based on this fact, one can claim that the method of purification described in the first embodiment according to the present invention is able to purify a target nucleic acid appropriately. Therefore, the purification method described above can be utilized appropriately as a pretreatment not only for PCR method but also for other amplification methods, and contributes to time saving in the amplification.

Also, Examples 1 through 3 demonstrated automatic analysis of nucleic acid by using the nucleic acid purification cartridge, the nucleic acid extraction cartridge and the nucleic acid analyzer according to the first embodiment of the present invention. The examples further demonstrated that a variety of known nucleic acid amplification methods, not only limited to PCR method but also including PCR method for example, can be utilized.

It should be noted here that the discussion on Examples 1 through 3 demonstrated that nucleic acid was amplified appropriately based on the configuration according to the first embodiment of the present invention. It is believed that the configuration according to the second embodiment of the present invention can also amplify nucleic acid appropriately, and provides the same advantages described above.

## Claims

1. A nucleic acid extraction container comprising:
a nucleic acid extraction element for extraction of a target nucleic acid from a sample and carrying of the extracted nucleic acid; and
a container main body formed as a separate member from the nucleic acid extraction element, including a housing vessel for storage of the nucleic acid extraction element.

2. The nucleic acid extraction container according to Claim 1, wherein the nucleic acid extraction element includes a solid matrix for supporting the target nucleic acid and a holding member for holding the solid matrix.

3. The nucleic acid extraction container according to Claim 2, wherein the solid matrix is held so as to be tilted with respect to a vertical axis of the holding member.

4. The nucleic acid extraction container according to Claim 3, wherein the solid matrix is supported horizontally or substantially horizontally with respect to said vertical axis.

5. The nucleic acid extraction container according to Claim 3, wherein the solid matrix is supported by the holding member so as to be penetrated by the holding member.

6. The nucleic acid extraction container according to Claim 5, wherein the holding member includes a tapered portion with a decreasing diameter toward a tip, a pin-shaped portion extending from the tapered portion for penetration through the solid matrix, and a holding tab for preventing the solid matrix from coming off the pin-shaped portion.

7. The nucleic acid extraction container according to Claim 3, wherein the solid matrix is formed as a disc.

8. The nucleic acid extraction container according to Claim 2, wherein the solid matrix is formed as a sheet and is held so as to be suspended with respect to the holding member.

9. The nucleic acid extraction container according to Claim 8, wherein the holding member includes a clip portion for clipping an end of the solid matrix thereby suspending the solid matrix.

10. The nucleic acid extraction container according to Claim 2, wherein the container main body includes one or more cleansing vessels for holding cleansing liquid necessary to remove an extra component from the solid matrix.

11. The nucleic acid extraction container according to Claim 10, wherein the container main body is provided with surplus cleansing liquid removal means for removal of surplus cleansing liquid from or around the solid matrix.

12. The nucleic acid extraction container according to Claim 11, wherein the surplus cleansing liquid removal means includes a water absorbing member.

13. The nucleic acid extraction container according to Claim 1, which is configured as a cartridge for setting in a nucleic acid analyzer.

14. The nucleic acid extraction container according to Claim 13, wherein the nucleic acid analyzer includes a carrier member for taking the nucleic acid extraction element which supports the target nucleic acid from the housing vessel and moving the nucleic acid extraction element to another location,
the nucleic acid extraction element including an engagement portion for engagement with the carrier member.

15. The nucleic acid extraction container according to Claim 14, wherein the engagement portion is cylindrical for fitting with a tip portion of the carrier member.

16. The nucleic acid extraction container according to Claim 15, wherein the engagement portion includes one or more cutouts for application of elastic force to the carrier member upon fitting with the tip portion of the carrier member.

17. The nucleic acid extraction container according to Claim 16, wherein the cutout or cutouts include at least any one of a slit, a notch and a through hole.

18. The nucleic acid extraction container according to Claim 14, wherein the holding member includes a projection for breaking the fit between the carrier member and the engagement portion.

19. The nucleic acid extraction container according to Claim 18, wherein the projection is provided by a flange extending outward.

20. The nucleic acid extraction container according to Claim 18, wherein the housing vessel includes a stepped portion for seating the projection upon placement of the nucleic acid extraction element in the housing vessel.

21. A method of removing an extra component other than a target nucleic acid from a solid matrix which supports the target nucleic acid, using a cleansing liquid, comprising
a repeated cycle of a state in which the solid matrix is submerged in the cleansing liquid and a state in which the solid matrix is not submerged in the cleansing liquid, caused by moving the solid matrix in up-and-down directions relatively to the cleansing liquid.

22. The method of cleansing a solid matrix according to Claim 21, wherein the solid matrix is tilted with respect to the up-and-down directions in the repeated cycle of the state in which the solid matrix is submerged in the cleansing liquid and the state in which the solid matrix is not submerged in the cleansing liquid.

23. The method of cleansing a solid matrix according to Claim 22, wherein the solid matrix is horizontal or substantially horizontal to the moving directions in the repeated cycle of the state in which the solid matrix is submerged in the cleansing liquid and the state in which the solid matrix is not submerged in the cleansing liquid.

24. The method of cleansing a solid matrix according to Claim 21, wherein surplus cleansing liquid is removed from the solid matrix by a water absorbing member after completion of the soaking in the cleansing liquid.

25. A method of purifying a target nucleic acid using a nucleic acid extraction element which includes a solid matrix for supporting the target nucleic acid and a holding member for holding the solid matrix, comprising:
a nucleic acid supporting step of causing the solid matrix to support the target nucleic acid in a sample by soaking the solid matrix in the sample; and
a cleansing step of removing an extra component other than the target nucleic acid from the solid matrix, using a cleansing liquid;
wherein the cleansing step is performed by a repeated cycle of a state in which the solid matrix is submerged in the cleansing liquid and a state in which the solid matrix is not submerged in the cleansing liquid, caused by moving the solid matrix in up-and-down directions relatively to the cleansing liquid.

26. The method of purifying a target nucleic acid according to Claim 25, wherein
the solid matrix held by the holding member is tilted with respect to a vertical axis of the holding member in the nucleic acid extraction element,
the cleansing step being performed by moving the extraction element in the up-and-down directions, with the solid matrix tilted with respect to the up-and-down directions.

27. The method of purifying a target nucleic acid according to Claim 26, wherein the cleansing step is performed by moving the nucleic acid extraction element in the up-and-down directions, with the solid matrix being perpendicular or substantially perpendicular to the up-and-down directions.

28. The method of purifying a target nucleic acid according to Claim 25, wherein the cleansing step includes removal of surplus cleansing liquid from the solid matrix by a water absorbing member after completion of the repeated soaking of the solid matrix in the cleansing liquid.

29. A mechanism for removing an extra component other than a target nucleic acid from a solid matrix which supports the target nucleic acid, using a cleansing liquid, wherein
the mechanism repeats a cycle of a state in which the solid matrix is submerged in the cleansing liquid and a state in which the solid matrix is not submerged in the cleansing liquid, by moving the solid matrix in up-and-down directions relatively to the cleansing liquid.

30. The cleansing mechanism for a solid matrix according to Claim 29, wherein the solid matrix is tilted with respect to the up-and-down directions when moved in the up-and-down directions.

31. The cleansing mechanism for a solid matrix according to Claim 30, wherein the solid matrix is perpendicular or substantially perpendicular to the up-and-down directions when moved in the up-and-down directions.
